# EUROPEAN PATENT SPECIFICATION

(11) **EP 2 232 667 B1**
(45) Date of publication and mention of the grant of the patent: **23.01.2013**
(21) Application number: 08864798.7
(22) Date of filing: 22.12.2008
(51) Int. Cl.: F03D 7/04, F03D 9/00, H02J 3/38

(54) **METHOD AND SYSTEM FOR CONTROLLING WIND POWER PLANTS**
VERFAHREN UND SYSTEM ZUR STEUERUNG VON WINDENERGIEANLAGEN
PROCÉDÉ ET SYSTÈME POUR COMMANDER DES CENTRALES ÉOLIENNES

(30) Priority: 21.12.2007 SE 0702878; 08.02.2008 SE 0800291
(43) Date of publication of application: 29.09.2010
(73) Proprietor: 2-B Energy Holding B.V., 7631 HS Ootmarsum (NL)
(72) Inventor: JAKOBSSON, Mikael, Grands Pass OR 95275 (US); PEELS, Herbert, NL-7631 HS Ootmarsum (NL)
(74) Representative: Nikolopoulou, Sofia
(86) International application number: PCT/SE2008/000741
(87) International publication number: WO 2009/082326

(56) References cited:
- EP-A1- 1 571 746
- EP-A1- 1 571 746
- WO-A1-01/48892
- WO-A2-02/054561
- US-A1- 2003 126 060
- US-B1- 6 479 907
- US-B1- 6 479 907

## Description

### Technical field of the Invention

The present invention generally relates to a method, a system and a computer program product for achieving optimal power production by enhancing and controlling the electric power production in a wind farm/plant. Especially the invention concerns enhanced control and optimization of production in a group of wind turbine generators (WTGs) consisting of at least two wind turbine driven generators of asynchronous fixed speed generator type, connected to an AC grid (WTG grid) by the principle of an electrical torsion shaft, and which grid frequency is controllable through a grid controller device. The invention further relates to a computer program and a computer readable medium comprising instructions for bringing a computer to perform said method.

### Some definitions

In order to facilitate the understanding of the following description of the present invention and its background some expressions are defined below.

**Wind Turbine Generator (WTG) or Wind Turbine Generators (WTGs)** is the description of complete wind turbine, including structure, individual or in multiples. Control Device (CD) is the invention by this application and may also be referred to as Supervisory Control Module (CD).

Grid Control Device (GCD) controls the HVDC grid system. This unit is connected to or integrated with the grid system.

Grid Code describes conditions and minimum requirements which need to be met in order for a power generation plant to be connected to the utility Public grid. For example, requirement for low voltage ride through function, if the utility Public grid voltage drops down to a certain level for a given amount of time, means that the wind turbine has to be in operation during and direct after such described grid disturbance. The grid code also describes minimum requirements for consumption of reactive and other power functions, required by power plants of today. More details of this can be found in specific documents issued by E.ON, Vattenfall etc. We refer to document by Risoe, Denmark which has summarized various grid code requirements (Risø-R-1617(EN)).

**HVDC system** or HVDC Light or HVDC Plus system (referred to as HVDC Light system) is a DC transmission system available on the market today. It is a based on a voltage source converter (VSC) technology which has characteristics suitable for connecting large amounts of wind power to Public grids, even at weak points in a Public grid system and without having to improve the short-circuit power ratio. This HVDC Light system does not require any additional compensation, as this is inherent in the control of the converters. From operation of installed systems experience has been gained with HVDC Light transmission systems showing it is an excellent tool for bringing power from windmill parks to a Public grid and at the same time contribute to AC voltage stabilization. An HVDC Light transmission system is able to control the active power transmission in an exact way. The power transmission can be combined with a frequency controller that varies the grid frequency.

An HVDC Light converter also controls reactive power for its AC bus, in conjunction with a master controller. The master controller can be designed from any new algorithm. In the case of connection to a passive network, as for example a wind farm, the HVDC Light transmission system can provide control functions for active and reactive power, so that both voltage and frequency can be controlled from the converter station. In particular, this allows black starting by controlling the voltage and frequency from zero to nominal. HVDC Light connected to a wind farm could also give the possibility to provide reactive power to the windmills during the start up. How the frequency and voltage are controlled is set by the wind farm requirements.

An HVDC Light transmission has only one significant value connecting both grids with each other being; the real power in size and direction which is equivalent to the product U x I on the DC link. All the other physical values, which are typical for an AC grid (reactive power, apparent power, frequency, harmonics, DIPS, SAGS, flicker etc.) are decoupled and do not affect the other grid. Many of these values can be controlled and mitigated by intelligent control schemes from the converter feeding the respective grid. Each converter is controllable through set-points given to the converter controller, such set-points can be provided through Ethernet access and in protocols provided by the supplier of such grid system.

**WTG grid** is the AC power cable system that connects each wind turbine to the offshore substation or Offshore HVDC station.

**AC Transmission grid** is the high voltage AC cable system that connects the offshore substation with the onshore substation.

**DC Transmission grid** is the high voltage DC cable system that connect the offshore HVDC station with the onshore HVDC station.

**Onshore substation** is the connection point where AC transmission grid is connected and where the connection is to the Public grid.

**Onshore HVDC station** is the onshore station that connects the DC transmission grid to the AC Public grid.

**Offshore substation** is the connection point offshore where the wind farm grid connects to the AC transmission grid.

**Offshore HVDC station** is the connection point offshore where the wind farm grid connects to the DC transmission grid.

**Public grid** is the AC high voltage grid system that distributes power for consumption within an area, region or country.

### Background of the invention

The importance of wind turbine technology is constantly growing as a result of escalating cost for the less environmentally-friendly fossil fuel energy etc. Wind turbine technology today uses individual configurations of converter technology installed in each and every wind turbine tower which makes the WTG more complex and more expensive. Future wind power plants will also be located further away from grid connection points, and it is then needed to reinforce electrical grid structure and this impacts on the electrical grid system to which these power plants will supply its power and will add further costs to the project. This is especially evident in offshore wind power projects where the wind farms will be very large, more than 300 MW, and where the distance to shore is much longer, maybe exceeding 100 km in some projects. Subsequently, the use of conventional AC grid solutions is no longer feasible and DC systems become a better option due to lower transmission cable losses and thinner cables. Here big companies are active and the first grid systems of this kind already have been found as the best option for use with wind farms in recent procurements. This counts for both onshore and offshore wind farms.

The design of wind power generation projects has consequently changed over the years as evolution has progressed, whereby the wind turbines have gotten larger and larger. In the eighties, virtually all designs were with a direct connection of an asynchronous generator through a gearbox to the driving rotor, forcing the generator to operate in an over-synchronous environment and hereby generating ampere to the normal AC grid system - the "fixed speed" system. The draw back with this system at the time was the impact of the system consuming reactive power from the grid, forcing the utilities to require compensation through capacitor banks and SVC (static var compensation) stations. One other inherent factor of this system is that this type of generator, connected directly to an AC grid system, creates a very direct and stiff relationship between the grid frequency and the generator rpm. This means that slight variations or changes in the grid parameters directly translates into the generator. As example, 10% frequency increase in the AC grid system directly translates to a 10% rpm increase of the generator. The meaning of "stiff" can be described as in a generator or a motor of asynchronous squirrel type, the rotor is following the rotational electrical field caused by the electricity rushing through the wound stator. As the frequency of the wind farm grid changes (acceleration/deceleration), so do the rotational speed of the electrical field in the generator. Subsequently the rotor when following the electrical field in a very direct way, changes the rpm of the generator equally, both in shape and form, hence the definition electrical torsion shaft. Therefore any power peaks generated from a wind turbine rotor will directly be carried in to the grid system by this configuration.

The size of the wind turbines installed during this period in general was between 50 - 200 kW per unit, and a great number of machines were installed on an individual basis. Groups of these machines (wind farms), where installed in greater numbers in the USA.

During the nineties the wind turbines grew rapidly in size and wind farms became more and more a common feature in the European market. The individual wind turbine size grew from the 200 kW to up to 2 MW today - a multiple of 10. At the same time these machines were installed more and more in groups where wind farms now reached 30-50 MW in size. As the size of machines grew, so did the total hub heights and hereto the related structures, that now to almost 99% is designed of a tubular tower basis, reaching up to 80 m hub height. During this period, the first offshore projects were installed in shallow waters with 500 kW "fixed speed" machines.

There were several factors that impacted the design choices for how power was generated, and how to deal with the increased structure heights and the related weight problems of such structures, in combination with the larger wind farms impact on local grid systems. The number of requirements came to impact the next generation of wind farm designs. Grid quality requirements are e.g. enforced by the utilities, the Grid Code, resulting in increased difficulty in making the fixed speed machines grid compliant unless costly additional equipment is added. Structural weight issues become economically bothersome as the structures now are much taller, and weights are increasingly accelerating, to maintain the higher natural frequency in the structures apart from and above the rotor induced frequency, as been done up to this point. With the increasingly larger rotors and the very "stiff" connection that is inherent with the asynchronous generator and an AC grid, start giving more reason to concern as drive train where directly exposed to those loads between WTG rotor and generator/grid system. Based on these conditions, a new generator system was implemented that enabled the wind turbine rotor to be operated at different synchronous speeds and which also enables a modulation of the outgoing power quality including fluctuations of outgoing power, voltage, no reactive power consumption etc. This system meets grid code requirements and also gives driveline softness as loads are absorbed by the mass of the wind turbine rotor in a through rotor speed control program, considering torque and power output in accordance with a pre-defined power-torque curve.

Another benefit of this system is that power production from a wind turbine with variable speed can be increased by reducing rpm in partial load conditions. This increase may range from 4-5% in a low wind speed site and down to 1-1,5% for an offshore high wind speed site. The benefit is gained in low wind conditions as the aero dynamical efficiency of the wind turbine rotor increases if the rotor rpm can be reduced in low wind. This is all performed by the individual wind turbine controller and by equipment located in each wind turbine (special generator, converter and related equipment).

This is technically resolved by going from the previous standard asynchronous induction generator to a doubly wound generator where a converter is incorporated in the design. The converter is connected to the rotor windings through a slip ring unit at the end of the generator shaft, enabling the modulation of the rotor electrical field in a controlled way, rotating it in both directions and at different speed, resulting in an electrical fixed speed related to the AC grid frequency but where the incoming generator shaft rpm varies. This system is more commonly referred to as a "DFIG" or "Partial Conversion" system. A variance of this is the use of a synchronous generator and a full converter, achieving the same outcome of the incoming rotor shaft.

The system described means that the grid code can now be achieved without capacitor banks, SVC stations and other expensive equipment otherwise needed. The system also brings flexibility in the driveline and the variable speed enables avoidance of resonance in structures. Each wind turbine now is an individual power plant that deals with individual grid issues and adaption to wind variation and variable speed increases production with up to 5% (low wind site), making it defendable to implement as added costs are lower than the performance benefit.

### Prior art

The patent EP1252441 (Siemens) describes a wind rotor group comprising asynchronous squirrel-cage alternators (generators) operating at a mutually common frequency, which can change in a sliding form. It also states that this group of generators can be connected to a direct-current transmission system, and can be connected via a mutually common converter. This patent does not describe the important features for how the frequency is set at a certain level and what logic is used to choose a particular set-point for the frequency. In other words, the patent only describes a physical (electrical) lay-out of multiple wind turbines but doesn't disclose in what way it can be realized.

The present invention performs specific tasks based on a number of inputs. The design difference to the present invention is that the control device is a central control unit that can monitor many variables in the turbines, the environment and in the grid, and that can calculate optimum settings in order to manage for example loads, power production, vibrations/resonance, etc and send signals to the turbines and the grid in order to change necessary set-points.

The patent US6479907 (ABB) discloses a plant for generating electric power through at least two separately driven wind power generators. The generators are feeding an alternating voltage to an alternating voltage line in common and a converter is adapted to convert the alternating voltage into direct voltage. A unit is adapted to control the converter to a frequency in such a way that a power maximum is obtained. The total power generated and fed to the converter is determined by measuring the current and voltage in the grid.

The Siemens patent describes the principle for achieving collective variable rpm at wind turbines. However, there are important differences in the logic and process for achieving this function where the patent does not measure/collect parameter values/data individually from the wind power generators to establish the necessary change resulting in less effective control. The present invention uses individual WTG data as basis for optimization of grid frequency and power production.

DE102005043422 (Falkenhagen) discloses "Operation of a local grid with reduced frequency at lower energy transmission", which is the concept of a local grid operating at a different frequency compared to another separate grid. The patent states that the frequency difference is adapted to occur during low power flow or absence of power flow, and that when there is a high power flow the grids (network zones) will be synchronously operated. The drawback with this technique is that the invention and the claims apply to a very limited situation.

The present inventions control device is applicable and very flexible for a wide range of production situations. In the present invention both grids (local and public) can operate completely independently at any time and need not to be synchronised. The design difference is that this patent deploys converter technology in parallel to the main connection cable, whereas in the present invention the main line includes the converter technology - i.e. not in a parallel set-up.

The patent document WO01/77524 (Aerodyn Engineering), "Method for operating offshore wind turbine plants based on the frequency of their towers" relates to a method for operating a wind turbine plant which is provided with a device for regulating the speed of the rotor. This method comprises determination of the critical frequency of the respective turbine and/or turbine components, determination of the speed range of the rotor, in which the entire turbine and/or individual turbine components is/are excited in the vicinity of their critical frequencies and operation of the wind turbine plant only below and above the critical speed range, the latter being traversed rapidly.

This patent describes how to control a single wind turbine. One drawback is that each wind turbine has to contain a control module, including measurement and signal processing equipment. The document also states that each wind turbine has a rotor speed regulating device.

The present invention comprises multiple wind turbines all having the same/similar natural frequency that needs to be avoided during power production, and that the rapid traversing through this frequency takes place collectively and is controlled by a central control device. The design difference is that in the present invention none of the turbines needs its own control unit, but that the frequency avoidance functions are performed centrally in one control unit. Also, none of the wind turbines has a rotor speed regulating device as the rotor speed will be controlled/changed by adjusting the frequency in the WTG grid at which the squirrel-cage asynchronous generators will operate.

The invention according to WO03/030329 (Wobben) relates to a method for operating a wind park, consisting of several wind power plants. The wind park is connected to an electric supply network into which the power produced by the wind park is fed and the wind park and/or at least one of the wind power plants of the wind park, is provided with a control signal/input which is used to adjust the electric power of the wind park or one or several individual wind plants within a range of 0-100% of the respectively provided power, especially the nominal output thereof. A data processing device is connected to the control input and is used to adjust the control value within a range of 0-100% related to the amount of power available from the entire wind park at the output where it is fed into the power network. The operator (EVU) of the electric power supply network to which the wind park is connected can adjust the power provided by the wind park via the control input. The patent describes that a number of input value are measured, which then lead to a control of the wind turbines. This prior art specifically mentions that the wind park is connected to a power supply network and that the data processing apparatus can set the power delivered to the network. This will be done by the operator of the power supply network. The application is that at least one or more wind power installations (or all wind power installations of the wind park) are throttled when the maximum possible network feed-in power value is reached.

The present invention is able to set more parameters compared to just the delivered power. These parameters do not only apply to the wind turbines but to the grid as well. The present concept also anticipates that it can be connected to transmission networks, not just to distribution networks.

This prior art patent describes that each wind turbine contains a microprocessor, which has full control over all the turbine parameters and which receives a power level set point as input from the data processing apparatus. In the present invention most of the control functions will not be handled in each turbine, but will be done centrally by the CD. The CD communicates to turbines through electrical set-points like the grid frequency.

The present invention not only controls the wind turbines, based on a number of measured input values, but also controls important grid parameters as well.

The invention WO04/099604 (Wobben), "Operating method for a wind park", relates to an operating method for a wind park consisting of a plurality of wind energy plants where a wind plant is provided with an electric generator and a wind park provided with a central device for controlling the wind park. The aim of said invention is to develop a method for operating the wind park consisting of a plurality of wind energy plants, a wind plant provided with an electric generator and a wind park provided with a central device for controlling the wind park, wherein the executions of operating processes are carried out by a limited and even reduced power supplied from the net (reference power). For this purpose, the inventive operating method for a wind park consisting of a plurality of wind energy plants is characterised in that the operating processes of each wind energy plant are controlled in such a way that the net electrical power is supplied up to a predefined maximum value. This patent specifically mentions that operational procedures are controlled in such a way that electrical power is taken from an electrical network only up to a pre-determinable maximum value. In other words, power consumption is the controlling feature. The drawback is that each wind turbine will contain a costly unit that has full control over all the turbine parameters.

The present invention system uses the local grid frequency as the controlling parameter. The difference is that the prior art patent implies that each wind turbine contains a microprocessor, which has full control over all the turbine parameters and which receives a power level set point as input from the data processing apparatus. In the present invention most of the control functions will not be handled in each turbine, but will be done centrally by the Supervisory Control Module. The CD communicates to turbines through electrical set-points like the grid frequency.

The document US2002029097 (Pionzio, JR. et al.) describes a Supervisory Command and Data Acquisition (SCADA) system for managing wind turbines for electric power generation. This patent describes a set-up of SCADA elements that collect and store data and communicating with other parts of the system. In the turbines there is also an interface included to control the turbine. One drawback is that this patent does not describe the option to control the wind turbines through adjusting the WTG grid.

The present invention includes as an important feature the functions to control WTG rpm through the grid. The design difference is therefore an added interface to control grid parameters. Another aspect is that with the present invention a number of functions can be achieved without sending signals to the wind turbine control interface, but sending signals to the grid control interface through which grid frequency can be adjusted which will directly impact the rpm of the wind turbine rotor.

The present invention uses local grid frequency as a controlling parameter for WTG rpm.

### Important problems to be solved

In using simplified technology, one problem is to meet the grid quality requirements, the Grid Code. This is today solved through increased complexity in power electronics and generator concept, including related needed subsystems and controlling equipment, located in each wind power structure, adding both cost and sources for failure. This issue is even more severe for larger wind farms as their impact on local grid systems is more significant.

In order to produce more power and cut production cost, the size of the turbines have grown, resulting in increase of the total hub heights and related structures, resulting in weight and resonance problems. As the projects offshore are located on deeper and deeper waters, the structures need increasingly taller. Without the ability to avoid resonance between the induced frequency by wind turbine rotor and the natural frequency of the structure, the structures have to be built with a higher frequency than the rotor frequency, making the structure "stiff" and very heavy.

The development in a combination between larger wind farms with bigger wind turbines, further out at sea and on deeper waters increases the impact on cost substantially in both the structures as well as the offshore cable system and the requirements towards the public grid systems.

Some further drawbacks of known (state of the art) technology are that generation is done at low voltage. This requires low voltage switch-gears which is very costly at high ampere levels and also requires that a transformer is located in close proximity to the generator. The individually controlled converters in each wind turbine also make it difficult to predict collective grid consequences having larger numbers of wind turbine units in a group. Also increased number of sensitive components as described earlier, reduces availability of the production plant and results in very limited room for AC grid optimization. The converter technology is also very sensitive to grid disturbances like transients, which are more likely to occur in series of wind turbines on the same cable and requires a stabile and static AC grid system.

### Summary of the invention

The invention relates to a method, a system and a computer program product for controlling the operations of a wind farm, for achieving optimal power production, comprising at least two wind turbine generators of asynchronous fixed speed generator type each connected, when in use, to a frequency controlled AC grid by the principle of an electrical torsion shaft, direct coupled to an HVDC-system.

New future project conditions and the fact that today's technology does not meet the economical and reliability requirements set by the owners and operators of offshore wind power, there is a need for achieving simplification and increased redundancy for new large scale power plant projects using the today's available technology.

The present invention is a new way of approaching the control of a wind farm in form of a multi-task (or "power plant") control, and will cut investment costs, increase project performance and economics, decrease project failures/downtime by elimination of sensitive equipment and reduction of the number of components used as well as reduction of cable terminations.

The present invention makes use of a known HVDC system as a transmission link to public grid connection point. The control device works as an interpreter of the wind farm conditions and determines parameters that collectively optimizes the operation and creates a collective behaviour of the wind turbines. These parameters are converted into a signal, which can be fed to and be transmitted by e.g. a HVDC converter station.

The invention will furthermore eliminate the individual wind turbine control function of the generators and its variable speed as well as related sensitive equipment by centralizing the control function through a central control device and using grid frequency variation in either a HVDC grid system or by other known inverter technology on a collective basis.

Several functions can be achieved on a collective level pertaining to resonance control between wind turbine support structures and wind turbine rotors, adjustment of aero dynamical stall of blades by adjusting rotor speed at partial or full load and adjustment of aero dynamical efficiency in partial load.

This approach is based on that vision the cable supply systems for future large scale projects further out to sea will use a HVDC technology. It is also based on the view that there will be a dedicated HVDC station built for each project.

The local farm grid functions as a conventional island grid system which means that the HVDC converter station controls the frequency and voltage. The control strategy is to give set points for frequency and voltage dictating the wind farm grid through the HVDC converter station.

The principle of the new invention is based on a collective control of simplified wind turbines through a CD that instead of requiring that the wind farm grid is operational at a fixed and static grid frequency makes use of the standard features and ability within a HVDC grid system to vary the wind turbine grid frequency. The CD monitors conditions and performance from the wind farm and the individual wind turbines and determines the individual wind turbine efficiency as well as the collective group efficiency or inefficiency, corresponding to the rpm experienced by the wind turbines. Based on a logic and control strategy, the Control Device compares actual data with optimal data pre-programmed in the system and defines the required rpm change. The Control Device set points equal to the new rpm, which are sent to a Grid Control Device (GCD) in the HVDC. The GCD sends control signals to the offshore HVDC station, which reacts within its operation range of control which in turn immediately affects the individual wind turbine on a collective level through the change of the grid frequency in the wind turbine grid resulting in the equivalent change in the wind turbines rpm.

It is an object of the present invention to provide a power regulating system, method and a device that makes it possible to optimize the power production from a wind farm consisting of group of at least two wind turbines.

It is another object of the present invention to provide a power regulating method, a system and a device that makes it possible to control the collective rpm to avoid structural resonance in the wind farm.

It is a further object of the present invention to provide a power regulating method, a system and a device that makes it possible to achieve Low Voltage Ride Through (LVRT) as defined in grid code.

It is a further object of the present invention to provide a power regulating method, a system and a device that makes it possible to provide auxiliary power during disconnection of the public grid.

These and other objects are achieved according to the present invention by a method as described in claim 1, a system as described in claim 5 and a computer program product as described in claim 6.

### Advantages of the invention

The present invention is a new way of approaching the control of a large offshore wind farm and cuts considerably the investment costs, increase the project performance and production economics and decreases project failures/downtime by elimination of sensitive equipment. It also reduces the number of components used as well as the cable terminations and general cable stress at current loading.

The invention makes also full use of a HVDC grid system in wind turbine generator control and grid code is achieved on a project basis and not individual basis. The decentralized control of rotor speed eliminates sensitive in-WTG components, enables simpler rotor control and saves thereby investment cost. Basically the individual wind turbine will operate on a fixed speed basis. The pitch system of each wind turbine will however seek optimal pitch setting given any rpm and wind condition below rated capacity and within acceptable shaft torque limits. Therefore the wind turbine with simple fixed speed technology operates with a pitch strategy of a variable speed wind turbine. Subsequently the element of variable speed is achieved with low cost fixed speed technology at wind turbine level.

Collective rpm control result in increased performance through reducing rpm in lower wind speeds, early start-up to avoid no-load idling of rotor, increasing aerodynamical efficiency etc, and collective guidance of WTGs through resonance ranges with tower, allowing for lighter structures.

The CD performs specific tasks based on a number of inputs and can monitor many variables in the turbines, the environment and in the grid. The CD calculate optimum settings in order to manage for example loads, power production, vibrations/resonance, etc and send signals in parallel to individual or group of wind turbines and to the GCD in order to change necessary set-points, and hereby manage more complex issues like project wide grid code requirements as well as manage auxiliary power production from project itself or manage certain consumption control between the wind turbines. The control device is very flexible for a wide range of production situations. Both grids (local and public) can operate completely independently at any time and need not to be synchronised.

The present invention comprises multiple wind turbines all having the same/similar natural frequency of structures achieved by either individual designs depending on water depth (same hub height) or by same structure height and design in variable water depth (variable hub height), that needs to be avoided either by idling or during power production, and that the traversing through this frequency is controlled.

The invention uses local grid frequency as a controlling parameter.

### Brief description of the drawings

The present invention will be described in more detail in the following, with reference to the attached drawings, in which:
**Figure 1** illustrates schematically the components included in a wind farm according to the invention and some line definitions used in the following figures,
**Figure 2** illustrates a typical offshore wind turbine based on the sea bottom,
**Figure 3** illustrates a block diagram of a control device according to the present invention,
**Figure 4** illustrates schematically the components included and the signals used in a wind farm for collective frequency control function according to the invention,
**Figure 5** illustrates, in a flow chart, the method for power production optimization through collective variable speed in partial load, in more detail,
**Figure 6** illustrates a simplified Power Analysis Table, for power curve comparison (at fixed pitch and stall regulation at different rotor rpm's),
**Figure 7a****-c,** reference data tables for actual measured power per WTG and two lookup tables for power curve comparison according to two different measurements,
**Figure 8** illustrates, in a diagram, actual measured data (measurement set 1) in a group of five WTG's at 7 rpm, also showing the WTG's production change as result of the rpm change,
**Figure 9** illustrates, in a diagram, actual measured data (measurement set 2) in a group of five WTG's at 7 rpm, also showing the WTG's production change as result of the rpm change,
**Figure 10** shows, in a flow chart, a method for power level optimization through collective variable speed in partial load,
**Figure 11** shows, in a flow chart, a method for power regulation through collective variable speed and joint frequency principle (with active stall and variable pitch regulated technology),
**Figure 12** illustrates schematically the components included and the signals used in a method for power regulation through collective variable speed and joint frequency principle (with active stall and variable pitch technology),
**Figure 13** shows, in a flow chart, a method for project power regulation through collective variable speed (with stall regulated technology),
**Figure 14** illustrates the components of a wind turbine and its structure resonance problems,
**Figure 15** shows, in a flow chart, a method for avoiding resonance, based on pre-programmed values,
**Figure 16** shows, in a flow chart, a method for avoiding resonance, based on measured values,
**Figure 17** illustrates components included and the signals used in a wind farm for collective frequency control for avoiding resonance, based on measured value,
**Figure 18** shows a system, the hardware and the signals used, for achieving grid code,
**Figure 19** shows a diagram example of the voltage as a function of time at LVRT,
**Figure 20** shows, in a flow chart, a method for achieving LVRT (grid code),
**Figure 21** shows a system, the hardware and the signals used, necessary for achieving auxiliary power,
**Figure** 22a-b shows, in a flow chart, the method for achieving auxiliary power.

### Description of Preferred Embodiments

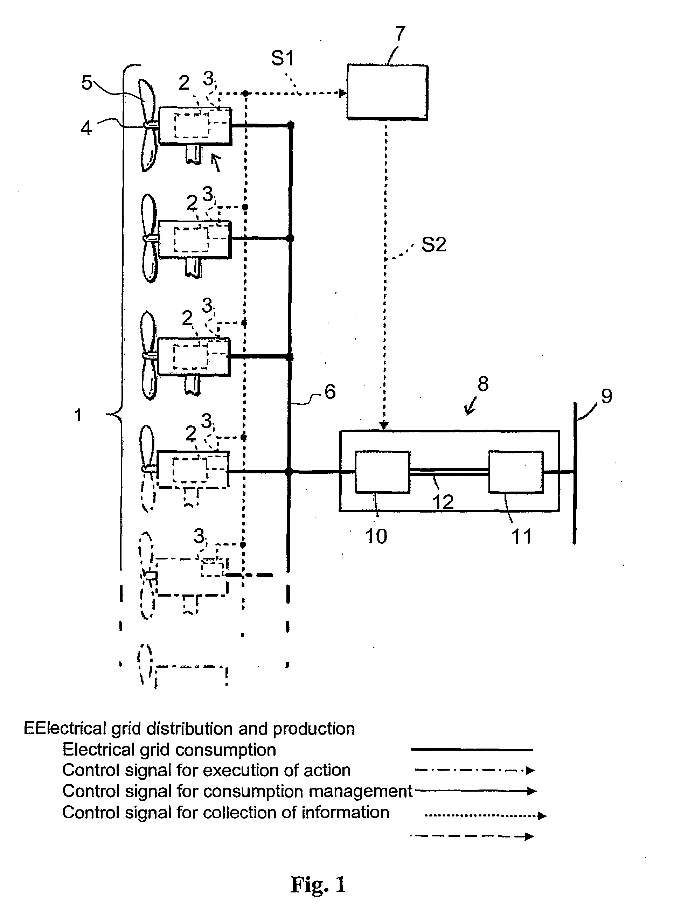

**Figure 1** illustrates schematically the basic components comprised in a wind farm according to the invention. A number of wind turbine plants 1, each having a wind turbine generator 2 (WTG), controlling equipment 3 and a rotor 4 with blades 5, are producing electric power to a local AC grid 6. A Supervisory Control Module, in the following called Control Device 7 (CD), is arranged to collect data, through a signal connection S1, from at least one WTG 2 and to control each WTG 2 and an HVDC system 8. The WTGs 2 are in this case of an asynchronous fixed speed type and connected, to the AC grid 6, by the principle of an electrical torsion shaft, i.e. direct coupled to the the HVDC system 8. The frequency of the local grid 6 is controlled by the HVDC system 8 which is electrically connected to the grid 6. The HVDC system 8 is also, on its onshore side, connected to a transmission or distribution network, i.e. a public grid 9. The offshore and onshore parts, 10 resp 11, are typically electrically connected to each other by DC-cables 12 which reduce the transmission losses over long transmission distances. The figure also describes the line definitions in this and following figures. Each line may also indicate direction of action by an arrow. The CD according to the invention is arranged to send control signals to the HVDC system as well as to the WTG's. The invention uses the direct relationship between the WTG 2 speed and the wind farm AC grid 6 frequency and uses the control device to generate a signal as an order to perform frequency change, continuously or in different an interval as needed, which is sent to the offshore HVDC system 8 that, by a data signal connection S2, controls the wind farm AC grid 6 frequency.

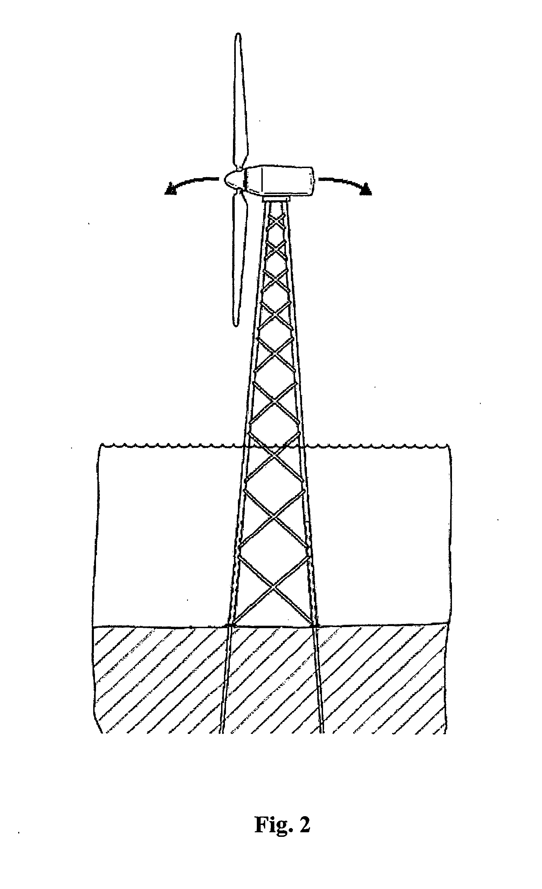

**Figure 2** illustrates a typical offshore wind turbine structure based on the sea bottom, below the sea surface. The tower is normally designed of a framework of metal and the whole structure is exposed to resonance due to the fact that the rotating parts, like turbine, blades and generator, induces vibrations to the structure. The critical structure frequency is normally within the working range of the turbine and it is important that this frequency can be avoided or passed within as short time as possible.

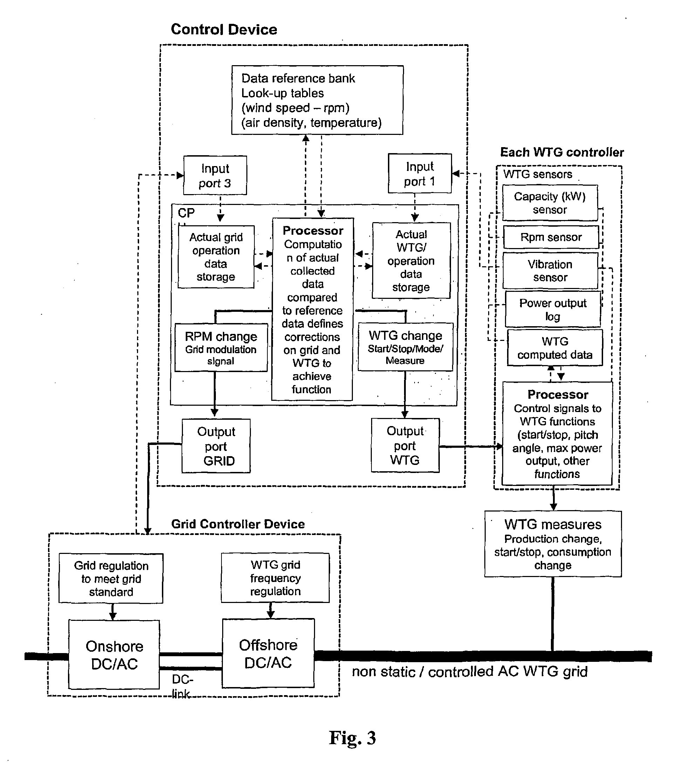

**Figure 3** illustrates a block diagram of a CD. The CD described in this invention comprises the following features used alone or in combination to execute defined function. The features of the CDs function and control can be described as;
i) control of collective rpm of WTGs,
ii) control of WTG pitch strategy,
iii) control of certain power consumption of WTGs,
iv) control of WTG start and stop function,
v) control of power production from one or more WTGs,
vi) control of HVDC grid set points for frequency,
vii) control of HVDC grid set points for outgoing power,
viii) control of HVDC grid treatment of power surplus stored in grid,
ix) control of HVDC grid treatment of power deficit in island grid function.

The CD is connected to a grid controller device, project sensors and at least one WTG controller, according to the present invention. The WTGs and the grid controller device are both connected electrically to the controllable frequency AC grid. The CD comprises a central processor unit, data storage memories and input and output ports. Data from at least one WTG, like capacity (kW), turbine or generator rpm, structure vibration, electrical power output, WTG site data etc are intermittent or continuously fed to the CD. The WTG comprises as well of a processor that controls the WTGs functions like start/stop, pitch angle, max power output, ability to receive set points for power regulation and etc. The processor transmits WTG computed data to the CD and receives control signals from the CD.

This is achieved by the CD collecting other data from the wind farm. Other data collected are e.g. actual wind speed from individual wind turbine located anemometers, wind direction from wind vanes in the project, individual wind turbine production, collective actual wind turbine production, rpm of the rotors, ambient temperature in the wind farm, air density and on-line/off-line signals from each turbine, grid frequency and torque of drive shafts. Data collected may be used individually or in combinations to establish the current settings of the wind farm. The CD is pre-programmed with look-up tables, which defines the performance of a rotor at each wind speed increment and at different rotor rpm's (grid frequencies). The collective actual production is then compared to the sum of each wind turbines calculated performance, using the measured actual wind speed at different rpm's all together summed up in total production for each rpm increment. The rpm group category that results in the highest total wind farm production, then represents the new optimal setting value. Before sending a signal to the HVDC station, the rpm value can also be adjusted for air temperature and air density (indicating energy content in wind), which may result in a slight modification to achieve highest performance (higher energy content than average - reduction in rpm and lower energy content that average - increase of rpm). An electrical or optical signal is then sent from the CD to the offshore HVDC station, which responds with normal frequency adjustment on the wind farm grid resulting in the new optimal rpm of the wind turbines determining the difference between the performance status and the optimal measure to take in order to calculate the necessary adjustments to achieve optimal aero dynamical performance. The principal of these rpm changes are done in partial load operation (below rated power) to reach wind farm optimum rpm and optimal power performance.

If the wind speeds within the wind farm goes below a certain wind speed, the wind turbines will slow down and stop. Turbines may idle without connection to grid or be in a stand still status. The procedure for enabling wind turbines to start up again in as low wind speed as possible, and get them online and in operation the CD must send a signal to the offshore HVDC station to reduce its frequency to lowest level accepted within its range of operation. As wind speed increases, the wind turbine will hereby reach cut-in wind speed earlier in the wind speed spectrum. This increases the operative control spectrum for collective wind farm control and decreases free idling time of rotors, which is known to have negative impact on certain bearings in gearboxes.

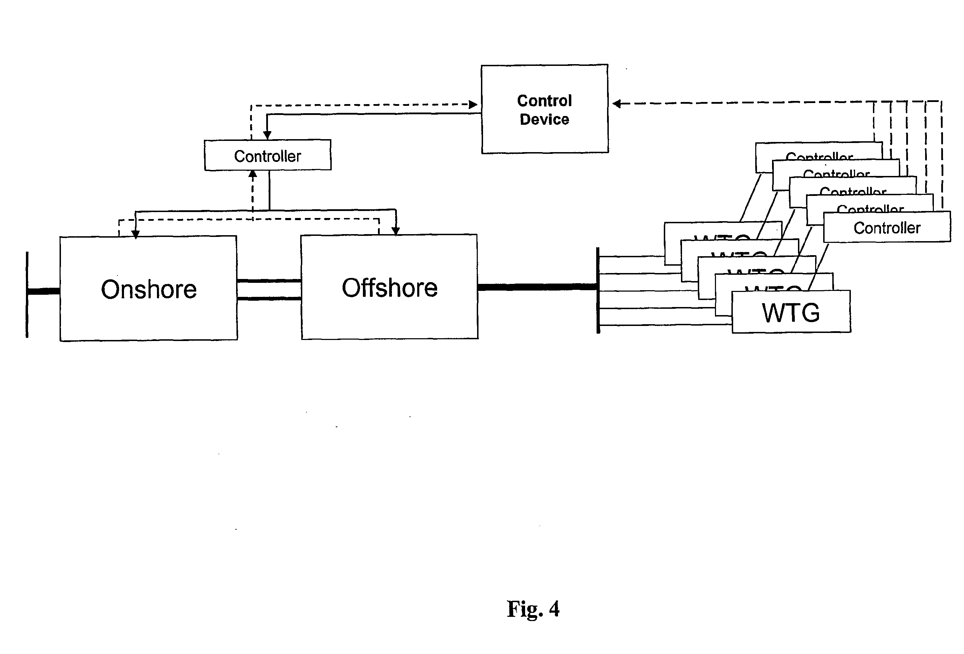

**Figure 4** illustrates a system and the main hardware and the signals used for collective control of the rotor speed (rpm) by interactive use of grid system converter technology to optimize power production and guide rotors rpm through the critical structure frequency resonance range.

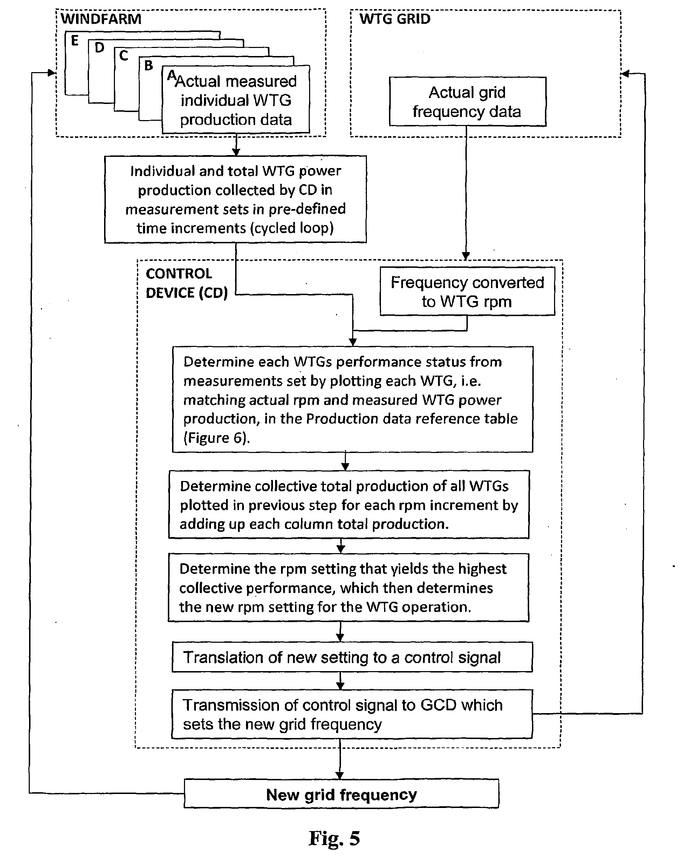

**Figure 5** illustrates a flow chart of the general principle of the invention. The CD is collecting grid data, describing the grid frequency under which the individual WTGs are in operation in a group. Depending upon the gearbox ratio of the wind turbines and the number of poles in the generator, the relationship between grid frequency and rotor rpm are established and used as a direct translation of grid frequency into rotor rpm for each WTG in the group. The CD is also collecting performance data from each of the WTGs in the group by compiling each individual WTGs power production, blade angle setting in measurements sets in pre-defined time increments (continuous loop). The collection of grid data and WTG data are done in parallel, describing each value at the same point in time. The time increments are determined by the project operator and are defined by the necessity to make continuous changes to the rotor rpm to enhance and optimize the power production of the WTGs in a group.

Each WTG is exposed to different wind energy content depending on its location, wind speed variations, different air temperatures, atmospheric humidity etc. As all WTG's in a group of this kind is operating under the same rotor rpm, controlled by the GCD or a HVDC-station, the power production collected from each WTG defines the wind energy content at each WTG.

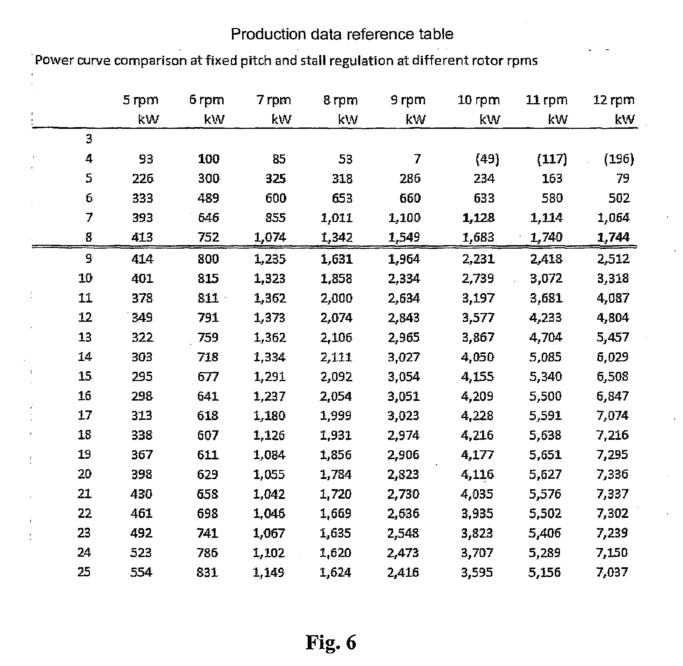

**Figure 6** illustrates a simplified Production data reference table that is used by the CD for establishing of an optimal collective rotor rpm or grid frequency. The Production data reference table comprises power production values representing the power production capacity for a specific type of WTG at different generator rpm's and wind speeds. This table is established by compiling fixed rpm power curves in columns, describing the relationship between wind speed and power production at a specific rotor rpm for each wind power generator in the group. A power curve exists for each rotor rpm increment, which for example can be with a lot higher resolution with a value for each 1/10 of an rpm, resulting in a total of 70 curves for an operational rotor rpm range of 6 -12 rpm. In combination with wind speed increments of for example 1/10 of a m/s and a operational wind speed or wind energy content range for the variable speed operation as exemplified in this case of 4 - 8 m/s, this will result in a total of 3.500 power production data/values. These curves are compiled in this simplified Production data reference table where wind speed increments are sorted in vertical axis (50 lines) and rpm increments are sorted in the horizontal axis (70 columns). The table comprises the production value for one WTG at any given point within the operational rpm range and the range for wind speed or wind energy content. Horizontally is displayed a number of columns representing the WTG's power production at a given wind speed or wind energy content but at different rpm's (each rpm is illustrated as a separate column). Vertically each column comprises power production capacity values for different wind speeds or wind energy contents and for one specific WTG rpm.

The Production data reference table is pre-produced e.g. by calculations or by empirical studies of what the WTG-type in question may produce with a specific rotor and the data in the Production data reference table is based on that the WTG blade angel control is working optimally. It is also possible to include individual rpm due to generator slip, pitch angle, air density, air temperature etc and adjust the production values in the table.

The reference values in the table may be updated when relevant new data is collected/available and the table could thereby be improved over time. The columns and lines in the table could be more detailed. The table may have a much higher resolution, i.e. more columns and lines with values, then illustrated, which would make it possible to very exactly define the production level and its related wind speed or wind energy content.

From the Production data reference table it is possible to determine the wind speed or wind energy content for the WTG in question by comparing the actual values for its power production and rpm in the table. This is achieved by having the CD, or each turbine controller by itself, match the capacity of the WTG with the same or closest capacity value in the table existing for the present rpm. It is also possible to interpolate values in order to determine the nearest value in each practical case. The value of the present power production, the present capacity, is matched to the nearest value in this column.

When the WTG's production status value is identified in the table, according to figure 6, it is also possible to determine how much the WTG could produce at a change in the collective rpm, i.e. if the rpm will be higher or lower. This is principally done by identifying the production values for the same wind speed but for another rpm, a higher or lower rpm. The values, as an example on the indicated line in figure 6, to the right and/or to the left of the present rpm column is evaluated.

Because all WTG's are operating at the same rpm in this control system it is possible to use the same rpm-column in the table when matching the actual and measured power production value for each WTG in the group to the corresponding or nearest value in the table.

All the WTG's actual production values collected in the group are summarized and the sum indicates the present total power production that is momentarily produced by the group of WTG's.

In a further step the power production values in the table at the same line (i.e. for the same wind speed).but in another rpm-column are summarized in a similar manner as described above giving possible total production values for other rpm-settings for the WTG's. The CD compiles each individual WTGs performance data collected and performs the same procedure for all units. By compiling the performance data and establishing the production efficiency for each WTG for each rpm increment, each collective total production for each rpm increment can be established. When this has been done for a predetermined number of rpm-columns the totals are compared to each other and the highest power production total is determined. The column producing the highest total power production value indicates and determines the optimal rpm-setting for the group of WTGs. Subsequently, the optimal collective rpm setting for the WTGs in a group can be established, resulting in the highest total power production of the group.

The established new rpm setting hereby represents the new rpm or Grid frequency setting. This rpm value is converted/translated to a grid frequency value by the CD and sent to the GCD which in turn, directly or indirectly, controls/adjusts the WTG grid frequency and thereby the collective rpm of the WTG's and hereby effects each individual wind turbine rotor rpm collectively and subsequently each WTGs performance, resulting in the collectively highest performance of the group or the wind farm.

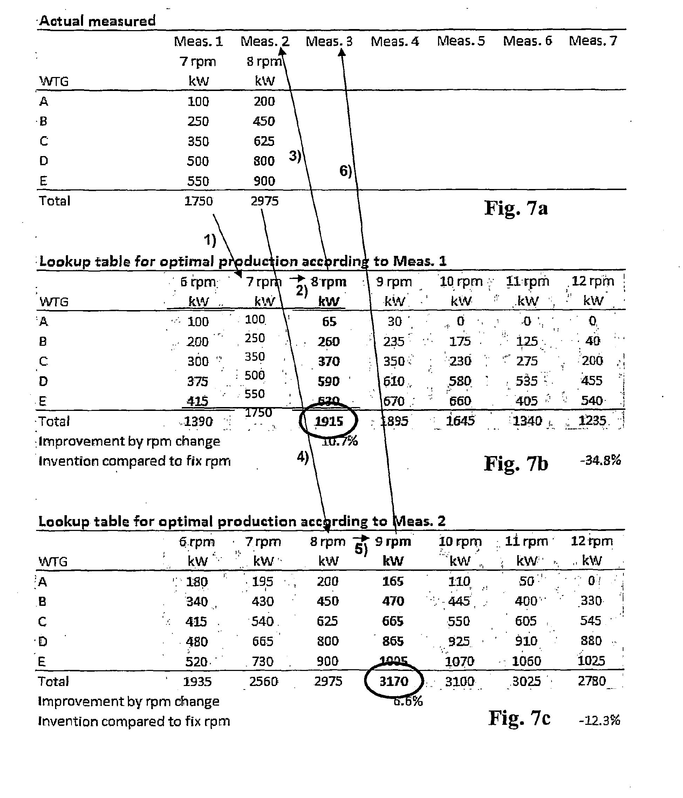

**Figures 7a** illustrates each of five WTG's power production under a column "Meas.1". The total is determined by adding up the column, in this case resulting in a total of 1750 kW. The same numbers now represents the column 7 rpm in Figure 7b, where also the production numbers are displayed for each unit should the rpm been higher or lower.

By matching each WTG's measured production in this table under the specific rpm column, the total of the numbers then represents the "Actual Measurement Set", transferred to the look-up table in Figure 7b and 7c. Also transferred to the look-up table in Figure 7b and 7c are the corresponding WTG production numbers for each WTG in the different rpm columns, representing the production change as a result of collective rpm change. In Figures 7b and 7c, these production sets for each incremental rpm change are compiled, resulting in a production total for each column. The "rpm column" showing the highest total number then becomes the new rpm setting for the HVDC Grid system to be processed and executed.

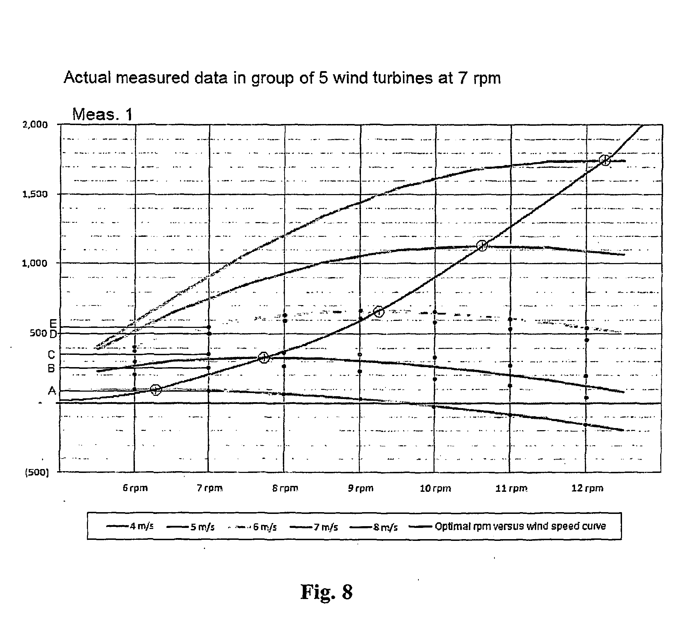

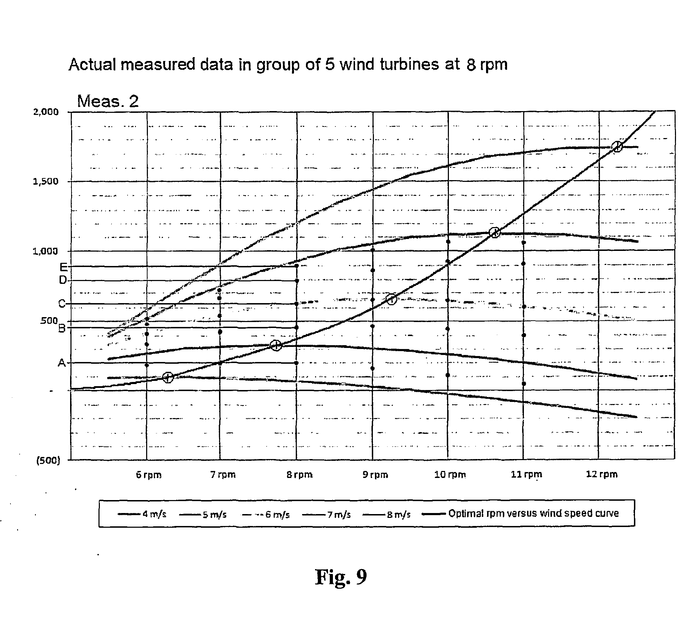

**Figures 8** **and** **9** illustrate diagrams that on the horizontal lines indicate the production levels at a given wind speed depending on different rpm settings (see horizontal data in Figure 6). Here is also marked on each curve the highest performance point on each curve with a cross in a circle, defining the optimized curve between wind speed and rpm on a WTG individual level.

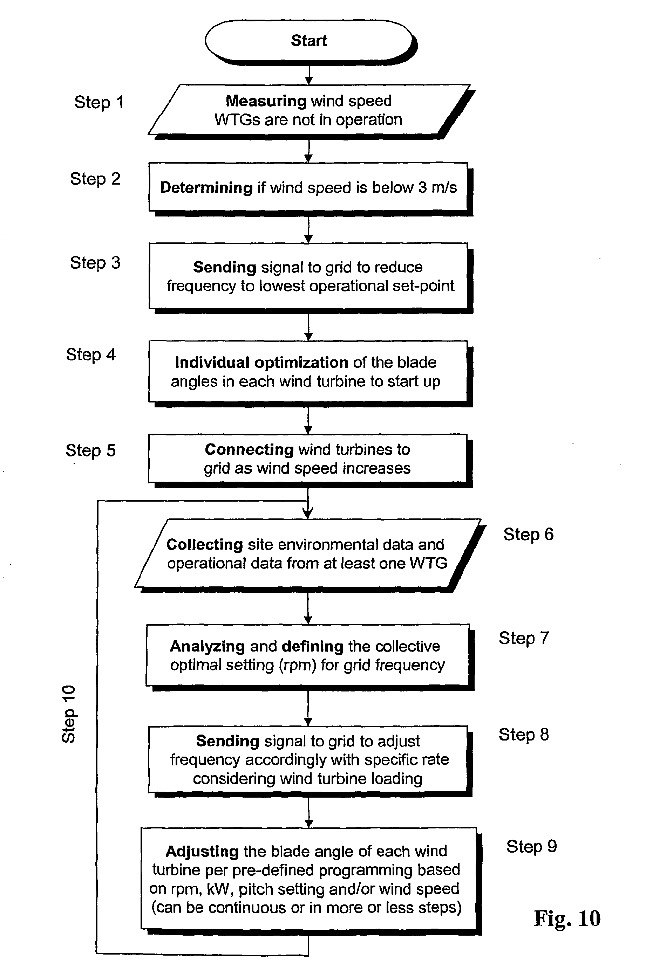

**Figure 10** shows, in a flow chart, a method for power optimization through collective variable speed of active stall regulated WTG from start and in partial load operation according to the invention. Optimizing of the power curve of a stall, active stall or variable pitch regulated WTG can be achieved by means of rpm adjustments by the CD (via HVDC). The basic principle of a stall regulated machine is based on a fixed rpm and a stall effect, which is designed to occur in such a way that overproduction, is prevented though a relationship between rotor rpm, and wind speed (wind energy content). As wind energy content and maximum production are given parameters, the control element rests with the rotor rpm and if active stall or variable blade pitch also with adjustment of the blade pitch angle to adjust the stall effect. The function of the CD is to enhance and optimize the aerodynamic efficiency of the project through collective variable rotor speed and hereby improve performance from the project e.g. compared to normally fixed rotor speed operation, by collecting and compiling grid and WTG performance values, based on such values determining the measure(s) of adjusting rpm to reach improved performance, and sending signal of such measure to the offshore HVDC station for adjustment of the grid frequency and hereby controlting the rpm of the wind turbines.

In order to establish appropriate settings in the case of a stall regulated WTG, the CD collects a minimum of at least two types of information. The first type is individual WTG performance value such as power production, rpm, and certain meteorological data such as wind speed, wind direction, temperature, humidity etc. The second type is grid data such as frequency, voltage and collective power production. These data is collected and stored in the CD to calculate and establish averages, trends and performance analysis. This analysis is done by:
1. Comparing actual performance and wind speeds with predefined data describing optimal rpm for relevant combination between wind energy content/wind speed and blade pitch angle setting.
2. As all wind turbines individual production (performance) and settings are determined and collected, here referring to wind speed, production and pitch setting, each wind turbines performance is corrected for any incorrectness in pitch setting and actual climate impact on wind energy content. Hereby the individual wind turbines actual production base is established.
3. As all units are operating on the same electrical torsion shaft (rpm), the collective actual base production is established as a total of all individual wind turbines power production.
4. This number is then compared to the pre-defined collective total (consisting of each individual wind turbines production in its actual wind speed and optimal pitch setting, all together cumulated at a range of rpm's described in stored Power Analysis Table and the from this created digital look-up tables (see example table in figure 6-9), where the cumulative highest total production represents the new desired rpm setting to be sent to the GCD and will effect the HVDC to change the grid frequency.

Subsequently this system functions as a collective variable speed system optimizing the speed (rpm) range and aero dynamical efficiency for the wind turbines, achieving a project wide optimal power production, both with and without pitch regulation system of the blades. As the starting frequency could be 20 Hz and maximum normal speed (rpm) for operation at rated power could be 50 Hz, the system provides for a variable speed range of 60%.

The power optimization is achieved according to the invention by the following method steps described in a flow chart, starting with the assumption that all WTGs are in no-operation mode due to low wind speed. (WTGs are standing still or are idling at a very low speed):
**Step 1.** Measuring the wind speed.
**Step 2.** Determining if the wind speed is below 3 m/s (develop?)
**Step 3.** Sending a signal in order to reduce the frequency of the WTG Grid to the lowest operational set-point, in this example this level is assumed to be about 20 Hz.
**Step 4.** Individual optimization of the blade angles in each wind turbine to start up.
**Step 5.** Connecting the wind turbines to the WTG Grid as wind speed increases and wind turbines reaches synchronous rotational speed corresponding to the WTG Grid frequency.
**Step 6.** Collecting/determining operational data of the WTG grid and/or operational parameters of least two WTG's, most likely a number of or all WTGs according to 1 and 2 above.
**Step 7.** Determining the rpm change needed in accordance with steps 1 to 4 above, to improve production.
**Step 8.** Generation of a control signal for, directly or indirectly, setting the WTG Grid frequency collectively for the group of WTGs. The signal is fed to the GCD for adjusting the frequency in the WTG Grid (via a HVDC-unit or similar) at a speed considering wind turbine loading.
**Step 9.** Each WTG adjusts the blade angle per pre-defined programming in own controller based on given parameters being rpm and determined wind energy content. This adjustment can be done continuous or in steps).
**Step 10.** Next step continues back to step 6 above, which then creates a continuous operational loop of production enhancement.

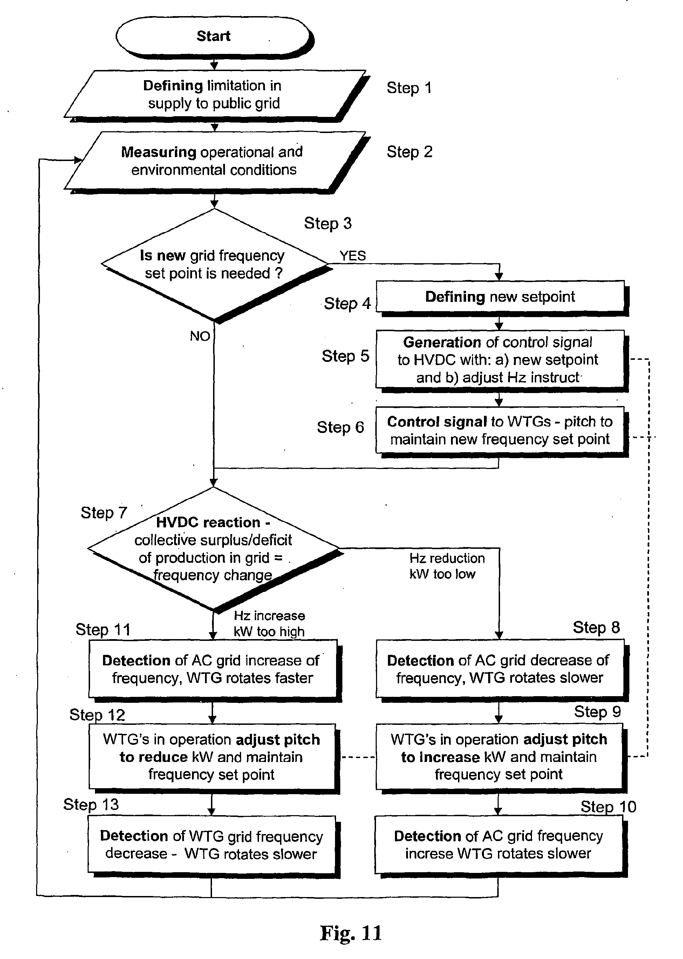

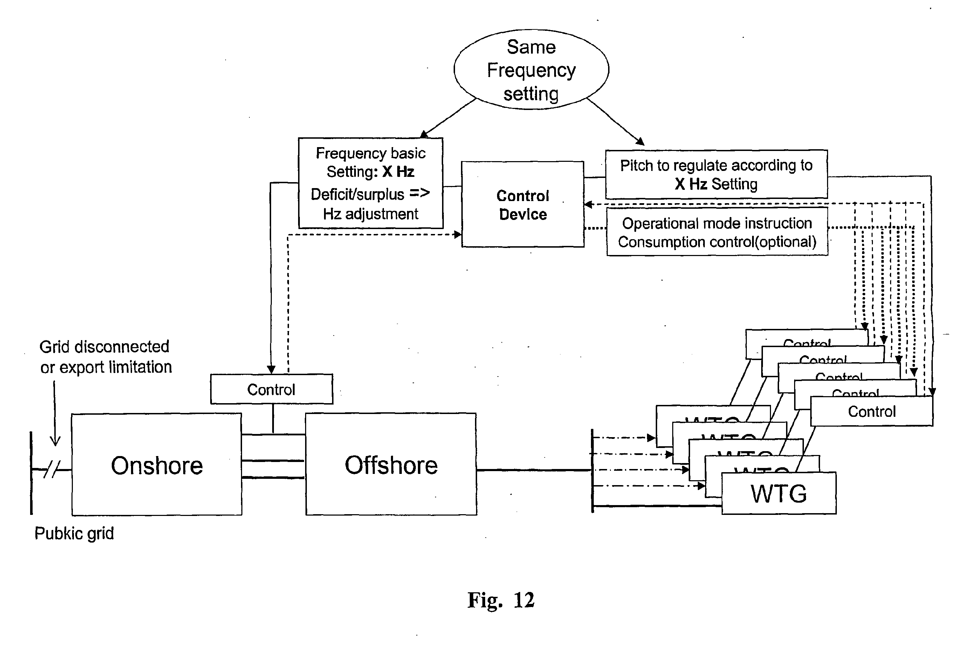

**Figure 11** shows, in a flow chart, a method for power regulation through collective variable speed with active stall and/or variable pitch regulation through common set-point for adjustment. This principle is possible through the use of CD, sending control signals to both HVDC grid and to WTGs in combined strategy. The basic control principle is to resolve a situation on a HVDC grid system where power export is limited or closed. The HVDC grid will in such situation be either pre-programmed or receive signal from CD to administrate any surplus inflow of power to the HVDC grid by increasing frequency and hereby store the power in form of kinetic energy in the WTG rotors. Hereby the base frequency is increased as a result of the power situation but is still the main frequency level, which the grid will return to as the "base frequency" after restoration of any surplus. As the grid receives its frequency set point, so do also the WTGs by CD, here sending control set-point of the same frequency or equal rotor rpm in parallel to the WTGs. Hereby, the WTGs will adjust pitch setting and control power production inflow to the HVDC grid system. Subsequently as the WTGs reduces production below acceptable HVDC grid export level, which results in that frequency equivalently is reduced until restored. By function in continuous loop, close interaction can be achieved between WTGs and the HVDC grid system and power production level can be achieved through the interaction. Grid reflecting inflow through frequency adjustment and the WTGs regulating the inflow based on a common set-point through pitch. This process is set forth in the following example through described steps:
**Step 1:** Defining limitation in supply to public grid. CD determines limitation/fault in grid export. In this case we assume operation at rated power at 50 Hz.
**Step 2:** Measurement of operational and environmental conditions provides parameters for CD to define suitable set-point for grid system. This may depend on power level, grid frequency at occurrence and needed room for frequency adjustment within the operational range of the grid system.
**Step 3:** Is new grid frequency set point needed? CD determines if frequency should be changed or not.
   If YES go to step 4
   If NO go to step 7
**Step 4:** Define new set point
**Step 5:** New set point is generated and issued to grid system that immediately corrects setting to such level. This happens at the same time as WTG receives control instruction. Subsequently a reduction of frequency will for example with a active stall machine increase the stall and reduce the power.
**Step 6:** WTGs receives collective control signal for set-point to adjust power production by means of pitch regulation to maintain such set point. Each wind turbine by this control strategy has no lower limit for production, but cannot exceed its maximum torque on main shaft, which is a relationship between rpm (grid frequency) and output power.
**Step 7:** HVDC reacts by either inflow surplus by increasing frequency or deficit, reduction of frequency.
   If inflow deficit go to step 8.
   If inflow surplus go to step 11
**Step 8:** Detection of grid frequency change by either WTG rpm or grid frequency measurement.
**Step 9:** WTGs in operation adjust pitch to either increase or decrease power in-flow. **Step 10:** Control signal to WTGs - pitch to maintain new frequency set point
**Step 11:** Detection of AC grid increase of frequency, WTG rotates faster
**Step 12:** WTG's in operation adjust pitch to reduce kW and maintain frequency set point.
**Step 13:** Detection of WTG grid frequency decrease - WTG rotates slower
   Go to step 2
**Figure 12** illustrates a system and the main hardware, used for power regulation strategy by use of joint frequency setting defined by CD for both HVDC grid and as set point for pitch regulation strategy in interactive use of grid system converter technology.

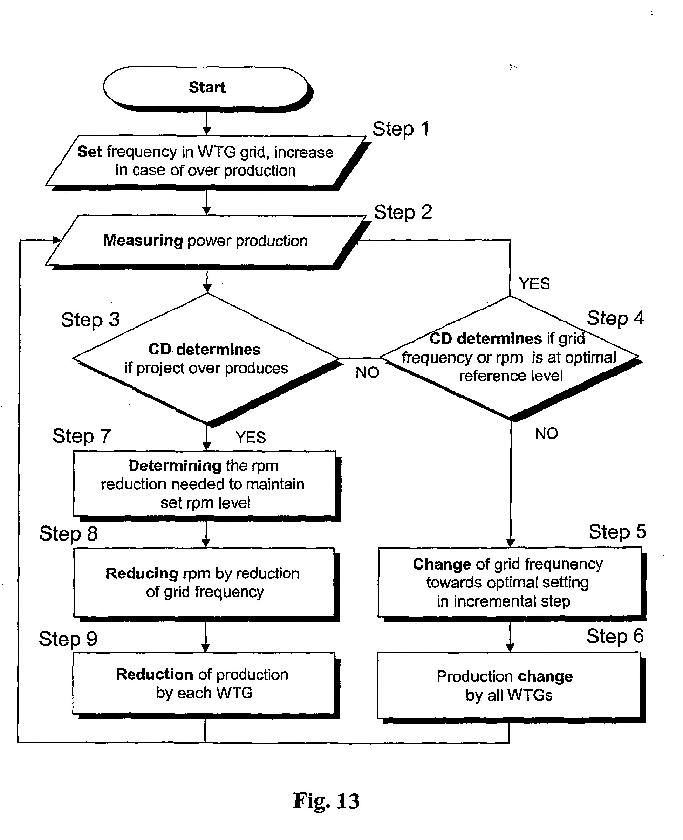

**Figure 13** shows, in a flow chart, a method for power regulation through collective variable speed with stall regulation WTG technology. This principle is possible through the use of CD, with the basic control principle is to regulate power production on a HVDC grid system where the capacity for WTGs operating in stall effect cannot be exceeded. The HVDC grid will in such situation receive signal from CD, which measures the total power output, to adjust frequency up or down and hereby control the collective effect of the WTGs by adjusting each wind turbines stall point and hereby either increase power by increase of frequency or decrease of power by reducing frequency, all defined by the CD. This enables to either maintain, increase or decrease total production from stall regulated wind turbines. This is achieved in the following process steps:
   **Step 1:** CD defines and sets grid frequency for rated rpm. We assume operation at rated power at 50 Hz.
   **Step 2:** Measurement of operational and environmental conditions provides parameters for CD to define suitable frequency set-point for grid system.
   **Step 3:** Does CD over produce?
      If Yes go to step 7 otherwise go to step 4
   **Step 4:** Is grid frequency optimal?
      If YES go to step 2 otherwise go to step 5
   **Step 5:** Change of grid frequency towards optimal setting in incremental step
   **Step 6:** Production change by all WTGs. CD increases frequency in incremental step towards optimal setting.
   **Step 7:** Determining the rpm reduction needed to maintain set rpm level. Production changes in project
   **Step 8:** Reducing rpm by reduction of grid frequency.
   **Step 9:** Reduction of production by each WTG.

**Figure 9** illustrates a WTG located offshore with the components impacting resonance problem.

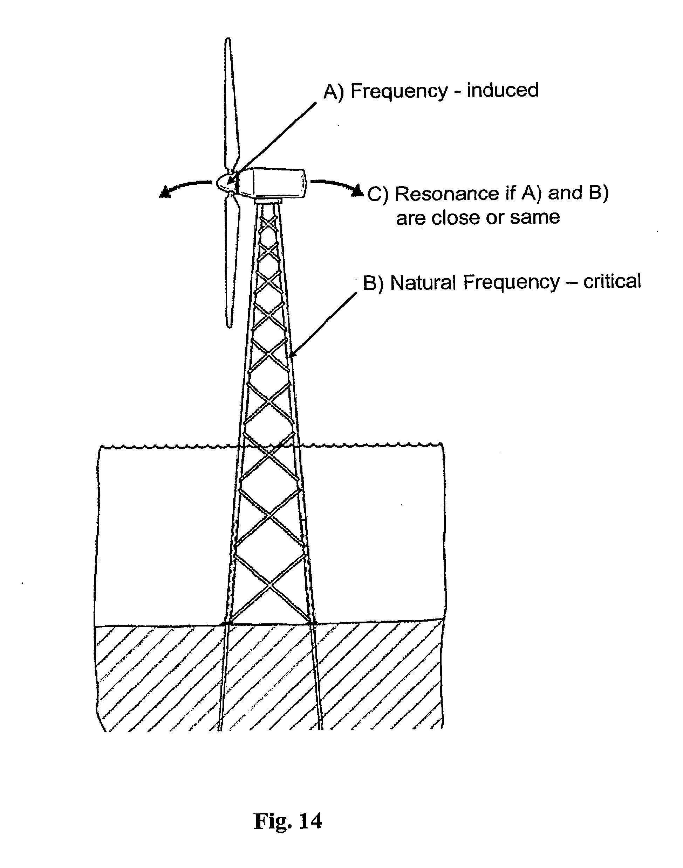

**Figure 14** illustrates a wind turbine and its structure resonance problems induced by the rotor and turbine. The resonance frequency is effected by the natural frequency of the structure. The critical resonance frequency is similar for each WTG throughout the wind farm as they are built in the same way and comprise the same parts.

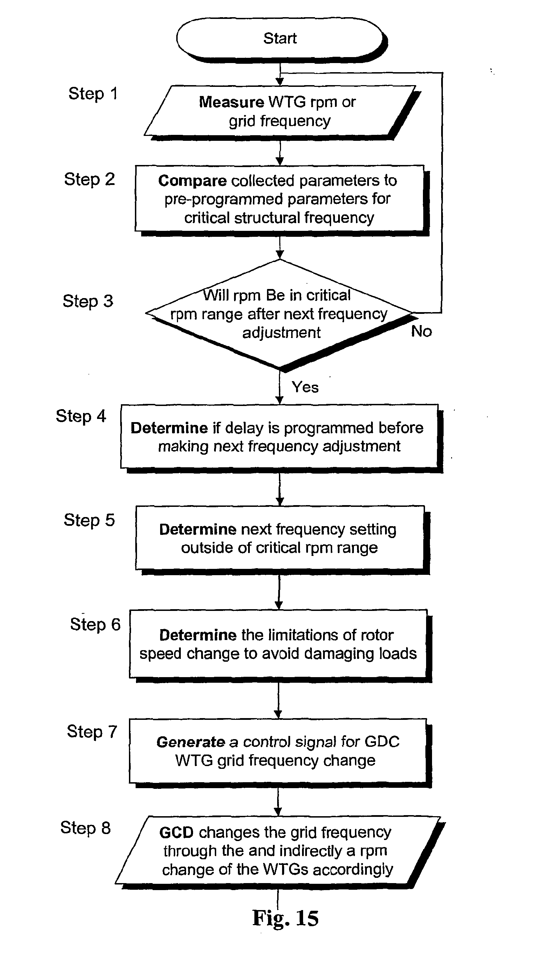

**Figure 15** shows in a flow chart, a method for avoiding resonance between rotor induced frequency and the natural design frequency of the WTG structure through collective variable speed of fixed speed induction generator connected to a WTG AC grid though the principle of an electrical torsion shaft, but where rpm is collectively regulated through grid frequency control according to the invention.

The control and generation of signal is achieved by the CD. The basic principle of the invention is to achieve a collective rpm control, which indirectly also result in control of the rotor induced frequency. As all structures in a project are designed with the same range of natural design frequency, this gives the CD the ability to avoid the critical resonance range of all WTGs by the collective rpm control. The principle allows for two optional methods;

The refers to a control by use of pre-defined critical frequency range described. This principle allows the CD to be programmed with a pre-defined range of frequency, the "red zone", which will be avoided by the CD in its control of the rpm. The CD will always compare a determined new frequency setting against the red zone values. When a conflict occurs, the CD will with or without delay initiate the pre-programmed ramp-up or ramp-down of frequency, giving the WTG rpm a controlled rpm change through the red zone. The rpm change also considers rotor acceleration and avoidance of excess loading on the WTG. This process is described in flow chart below in the following method steps:
**Step 1:** Measuring WTG rpm or grid frequency.
**Step 2:** Compare collected parameters to pre-programmed parameters for critical structural frequency
**Step 3:** Will grid frequency or rpm be in the red zone after next change of frequency. If yes go through steps 4-8, if no go back to step 1.
**Step 4:** Determining if a delay is programmed before activation of cross through.
**Step 5:** Determining next frequency setting outside of critical rpm range
**Step 6:** Determining the limitations of rotor-speed change to avoid damaging load
**Step 7:** Generating a control signal for GDC WTG grid frequency change
**Step 8:** GCD changes the grid frequency through the and indirectly a rpm change of the WTGs accordingly. Then go back to step 1 which creates a continuous operational loop of production enhancement.

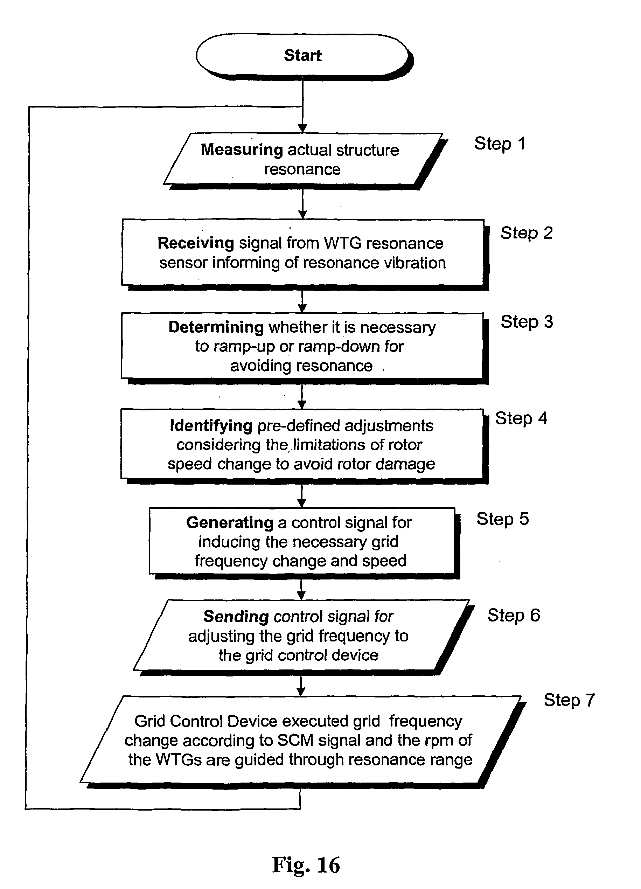

**Figure 16** describes a control by use of resonance sensors located in the WTGs, defining activation of cross through sequence. This principle allows the CD to be programmed with a pre-defined range of frequency, the "red zone", which will be avoided by the CD in its control of the rpm. The CD will always compare a determined new frequency setting against the red zone values. When a conflict occurs, the CD will with or without delay initiate the pre-programmed ramp-up or ramp-down of frequency, giving the WTG rpm a controlled rpm change through the red zone. The rpm change also considers rotor acceleration and avoidance of excess loading on the WTG. This method includes the following method steps:
**Step 1:** Measuring actual structure resonance.
**Step 2:** Receiving signal from WTG resonance sensor informing of resonance vibration
**Step 3:** Determining whether it is necessary to ramp-up or ramp-down for avoiding resonance
**Step 4:** Identifying pre-defined adjustments considering the limitations of rotor speed change to avoid rotor damage
**Step 5:** Generating a control signal for inducing the necessary grid frequency change and speed
**Step 6:** Sending control signal for adjusting the grid frequency to the GCD
**Step 7:** GDC executed grid frequency change according to CD signal and the rpm of the WTGs are guided through resonance range. The process loops back to step 1 and starts all over again.

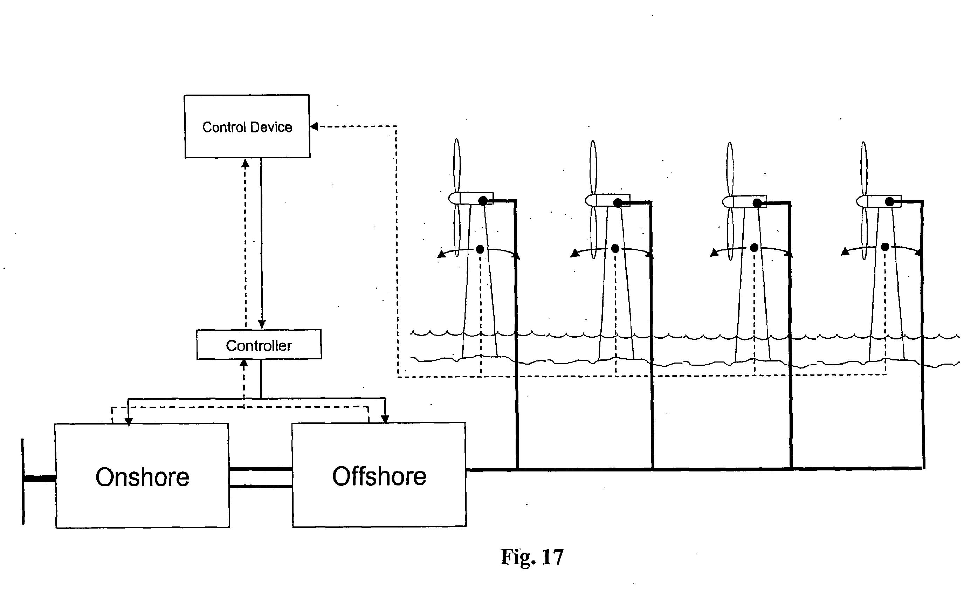

**Figure 17** illustrates components included in a wind farm for collective frequency control for avoiding resonance, based on measured value,

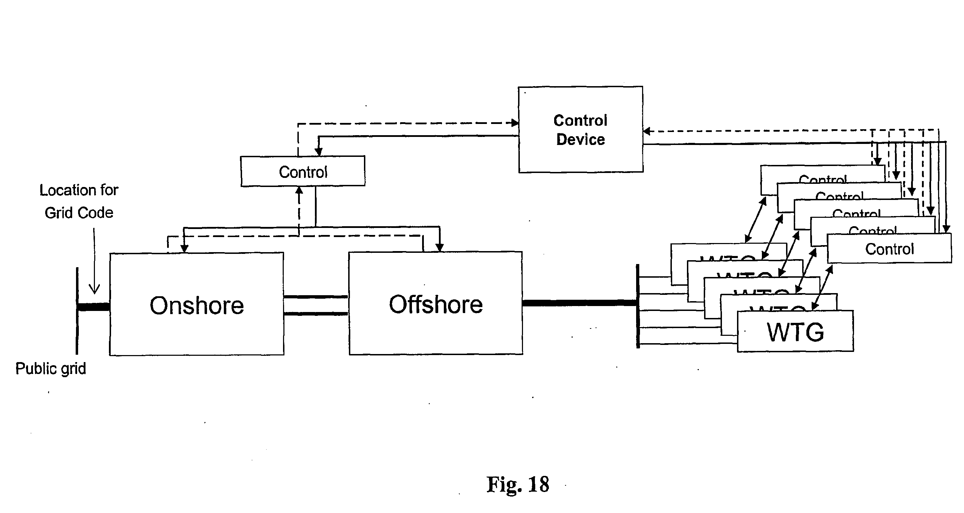

**Figure 18** shows a system, the hardware and signals used for achieving grid code function.

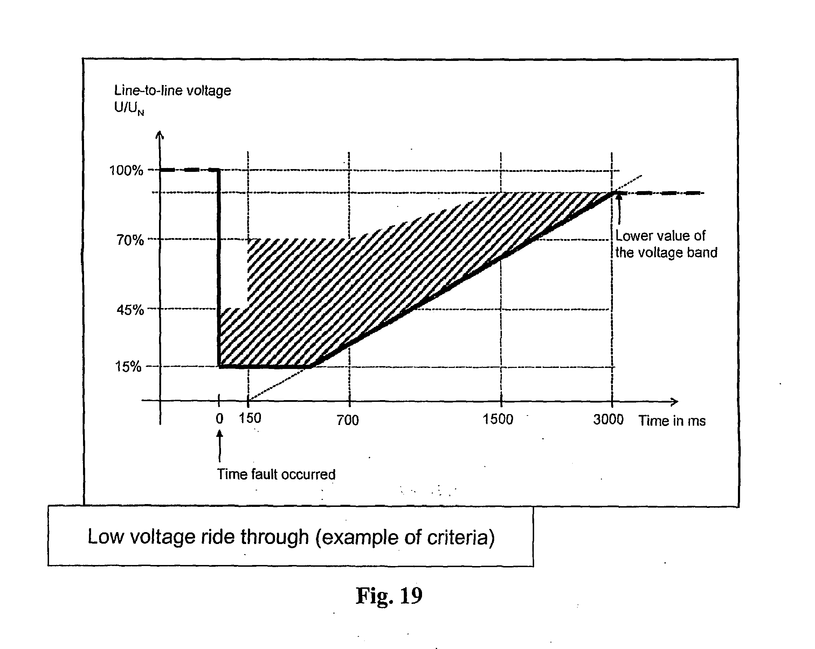

**Figure 19** shows a diagram of the voltage as a function of time at LVRT. This shows voltage dropping from 100% to 15 percent instantaneously, ramping back to 90% within 3 seconds. The requirement is for a project not to drop out of production during such an event.

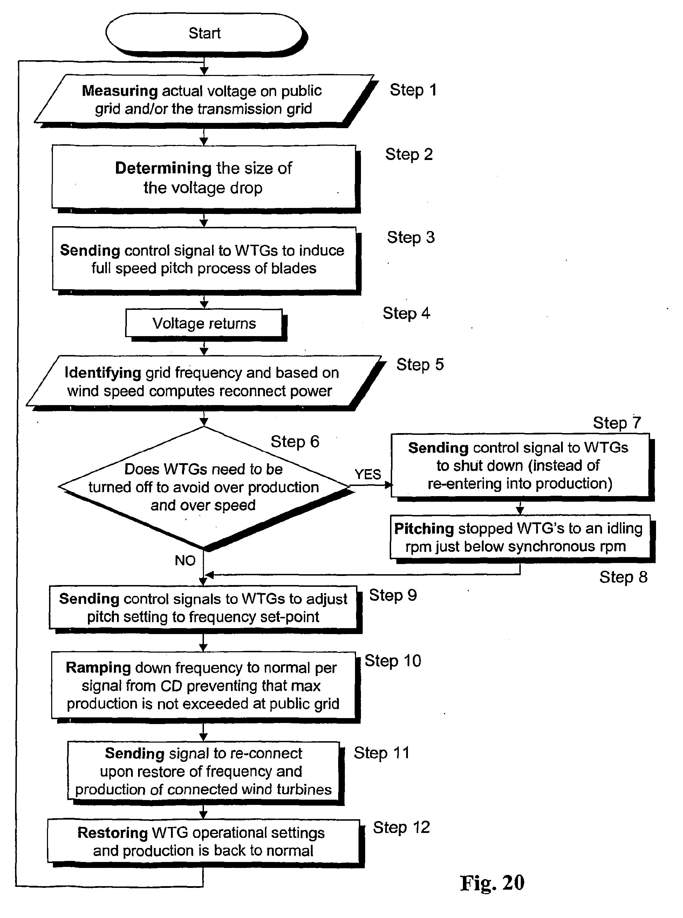

**Figure 20****,** shows, in a flow chart, a method for achieving LVRT (grid code), by combined control by CD of both grid and WTGs, using elements of collective pitch strategy, selected shut down strategy and frequency control for ramping back frequency to normal. This is done in the following steps:
**Step 1:** Measurement of voltage on public grid through GCD
**Step 2:** Voltage drop is identified - CD defines size of voltage drop and production at the occurrence.
**Step 3:** CD sends immediate collective signal for all WTGs to activate full pitch to reduce power. Frequency increases in grid as production inflow exceeds outflow - WTG rpm increases.
**Step 4:** Voltage returns
**Step 5:** CD identifies, depending on wind speed and frequency/rpm the reconnecting power level of project
**Step 6:** CD determines if and how many machines that shall not be reconnected to grid system, in order not to exceed the maximum allowed power limit to supply grid. Here two options follow: YES, WTGs are turned off (a) and NO, WTGs are not turned off (b).
   If YES go through steps 7-8
   If NO go through steps 9-12
**Step 7:** CD send immediate control signal to selected WTGs to shut down.
**Step 8:** WTGs are stopped to idle below synchronous speed.
**Step 9:** Sending control signal for WTGs in operation to pitch to restore frequency reference set-point.
**Step 10:** Signal from CD to ramp down frequency ensuring that overloading does not occur at grid point and in WTGs. Ramp down speed is controlled by CD.
**Step 11:** Upon restoration of grid conditions and frequency, idling WTGs are reconnected in normal fashion.
**Step 12:** CD restores normal operational set point for WTGs to normal operation.

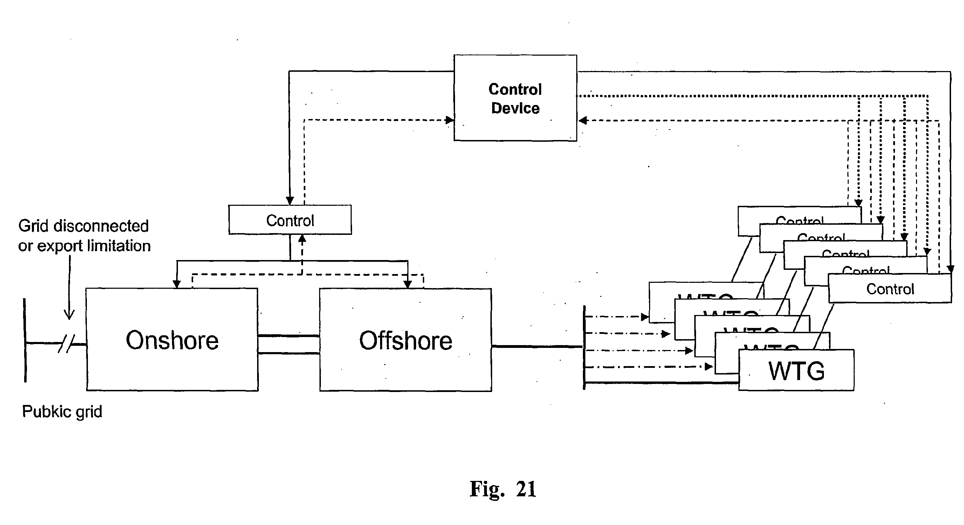

**Figure 21** shows a system, the hardware, necessary for achieving auxiliary power by operating WTG or WTGs within the project.

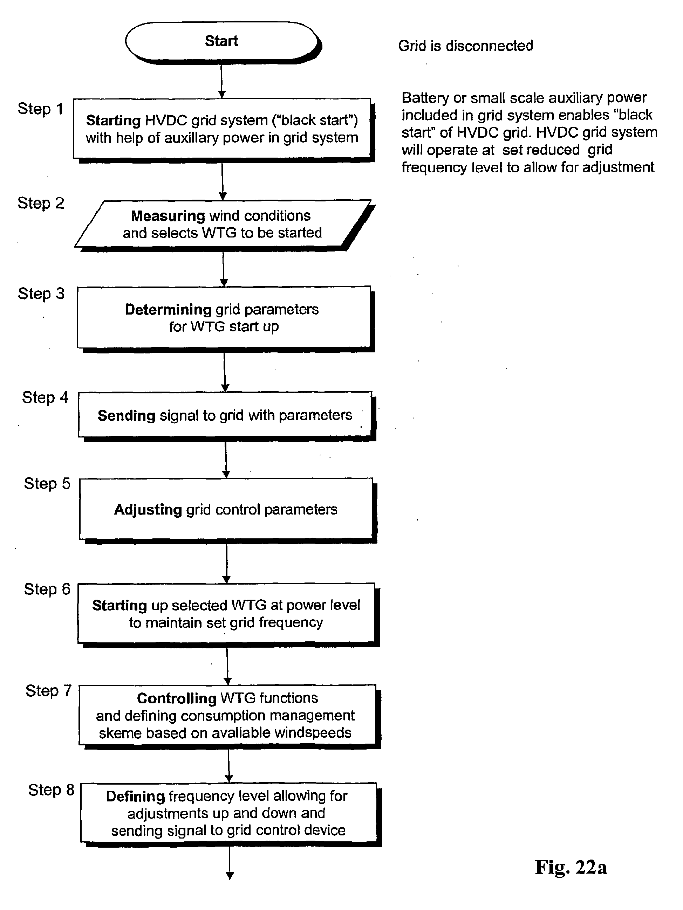

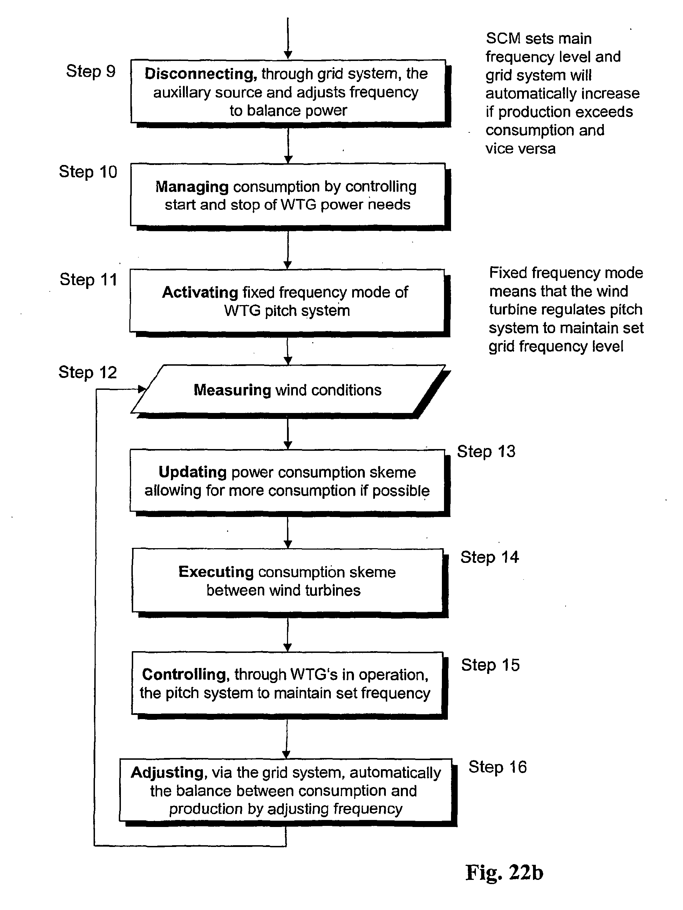

**Figure 22a** and **22b** shows, in a flow chart, the method for achieving auxiliary power by production by WTG or WTGs in the project. The invention is to avoid the operation and installation of expensive diesel generator stations to provide for power. The internal production shall provide for enough power to run necessary control and safety functions in stopped WTGs. This is done by the following steps:
**Step 1:** HVDC starts up (Black start) by own auxiliary power.
**Step 2:** CD measures conditions and selects WTG or WTGs to be started.
**Step 3:** CD determines grid frequency and power limit WTG start up.
**Step 4:** CD sends signal to grid with parameters for frequency
**Step 5:** HVDC adjusts grid parameters
**Step 6:** CD signals WTG or WTGs to start up.
**Step 7:** CD monitors defined consumption in stopped WTGs and control consumption if necessary, cycling activation of control and safety function.
**Step 8:** Defining frequency level in balance between available production level and consumption need.
**Step 9:** Disconnection of HVDC auxiliary power system. Operation according to principle described in Figure 6.
**Step 10:** Consumption control if needed by CD.
**Step 11:** Activating fixed frequency mode of WTG pitch system
**Step 12:** Measuring wind conditions
**Step 13:** Updating power consumption scheme allowing for more consumption if possible
**Step 14:** Executing consumption scheme between wind turbines
**Step 15:** Controlling, through WTG's in operation, the pitch system to maintain set frequency
**Step 16:** Adjusting, via the grid system, automatically the balance between consumption and production by adjusting frequency.

In a static electric system there is a fixed relation between frequency and voltage. Hereby all electrical components are tuned according to these values. In an electric power supply system with variable frequency, the composition of components may vary and not necessarily be tuned according to the fixed values on which a static electric power supply system is based. By this, the value of having an active voltage control in parallel with an active frequency control is increasing. Consequently different degrees of optimization could be necessary for different components in order to achieve optimal energy output. As an example a cable system and equipment for fixed capacitor batteries (fixed phase compensation) has an opposite reaction to voltage control compared to a transformer or a generator. Consequently optimization can be done by controlling the voltage in a system perspective where a multiple of generators, motors, cable systems, transformers, phase compensations etc are considered.

When the frequency in an alternating current network (system) with connected wind power stations and related equipment is adjusted collectively by a central converter or frequency control, many of the involved devices conditions of operation changes. To such devices could be included cable systems, transformers, devices for phase compensation and components in the wind power station such as generators and motors. This stands in contradiction to a normal application of a converter where it is connected directly to a motor or a generator. In this application the control function will be static or dynamic and it only needs to adjust to the mother component for which the converter has its specific function. This differs to the described system with central control of a complete generating electric supply system, which includes a new principle that pay regard to all components in the electric supply system and to a multiple of components. A change of the frequency influences the magnetic flow in the iron core in a specific asynchronous type of a generator that thereby influences the losses and the heating. This characteristic differs from generator to generator. If only the frequency is changed, the losses in the unit will increase. This means that by also adjusting the voltage the efficiency of the component may be influenced and thereby improve the efficiency of the unit in the system. As an example, by reduction of the grid frequency it is also possible in parallel to decrease the voltage in such a way that the current flow decreases at low frequencies, and hereby the losses in a generator are reduced. The iron cores of transformers are affected in the same manner.

In contrary to the generator the current and the losses increases when the voltage is decreased in the cable system, which is opposite to the generator and the transformer. At the use of fixed capacitor batteries they are decreasing their generation of reactive effect and thereby also influence the effect flow in the cable system and amplify the cable losses, i.e. in direct contradiction to the generator and transformer.

For example, a HVDC-Light system has lower losses if transferring lower power capacity levels at lower DC voltage. The total losses will be lower when transferring lower power levels if lower AC voltage is used in combination with lower DC voltage, i.e. when the frequency is low. By this an optimization can be done from a system perspective which brings new values from both cable system and the function of associated equipments that improves the efficiency in the system and upholds the performance of the system.

In order to meet a frequency change the voltage is changed in a predetermined relation that is determined out of the design of the entire system and that takes into consideration all included components change in both frequency and voltage. This results in a new type of algorithm that minimizes the summarized losses and total heat generation in the entire electric power system without lowering the performance in general.

In this specification the invention has been described with reference to specific embodiments.

## Claims

1. Method for controlling the operations of a wind farm (1), for achieving optimal power production, comprising at least two wind turbine (3) generators of asynchronous fixed speed generator (6) type each connected, when in use, to a frequency controlled AC grid by the principle of an electrical torsion shaft, direct coupled to an HVDC-system (10), **characterised by the steps of,**
- collecting at least one actual parameter representing the local grid frequency,
- collecting at least one individual wind turbine (3) generator's operational performance related momentary value such as rpm and or a value representing the wind turbine generator's power production of two or more wind turbine generators (6) in the wind farm (1).
- using reference data comprising individual wind turbine generator (6) values representing the power production capacity at different turbine rpm's and for different wind energy content or wind speeds, - determining, based on said collected values and reference data for the individual wind turbine generato (6), by comparing and matching the momentary performance data with the reference data, the individual wind turbine (3) power production change as a result of rpm change,
- determining, based on individual momentary performance data for two or more wind turbine generators (6), the collective power production difference for as a result of collective rpm or grid frequency change,
- determining, based on the collective power production of the wind turbines (3) at different rpm's, the optimal rpm and respective grid frequency to achieve highest collective power production, and
- changing, through the grid control device, the grid frequency to the determined optimal grid frequency setting.

2. Method according to claim 1,
**characterised by the further stop of,**
- compiling the reference data, comprising power production values, in a production data reference table.

3. Method according to any preceding claim,
**characterised by,**
- collecting meteorological data for determining the energy content In the wind.

4. Method according to any preceding claim,
**characterised by the further step of,**
- using wind direction, air temperature and/or air humidity as the meteorological data.

5. System for controlling the operations of a wind farm (1) for achieving optimal power production, comprising at least two wind turbine (3) generators of asynchronous fixed speed generator (6) type each connected, when in use, to the AC-side of a frequency controlled grid by the principle of an electrical torsion shaft, direct coupled to an HVDC-system (10),
**characterised by,**
- that a memory is adapted to store reference data representing individual wind turbine generators (6) power production at different wind speeds and different turbine rpm's,
- that means are arranged to collect at least one actual parameter representing the grid frequency,
- that means are arranged to collect at least one individual wind turbine (3) generator's operational performance related momentary value such as rpm and or a value representing the wind turbine generator's power production of two or more wind turbine generators (6) in the wind farm (1),
- that means are arranged to use reference data comprising individual wind turbine generator (6) values representing the power production capacity at different turbine rpm's and for different wind energy content or wind speeds,
- that means are arranged to determine, based on said collected values and reference data for the individual wind turbine generator (6), by comparing and matching the momentary performance data with the reference data, the individual wind turbines (3) power production change as a result of rpm change,
- that means are arranged to determine, based on individual momentary performance data for two or more wind turbine generators (6), the collective power production difference for as a result of collective rpm or grid frequency change,
- that means are arranged to determine, based on the collective power production of the wind turbines at different rpm's, the optimal rpm and respective grid frequency to achieve highest collective power production, and
- that means are arranged to change, through the grid control device, the grid frequency to the determined optimal grid frequency setting.

6. Computer program product for controlling the operations of a wind farm (1) having a group of at least two wind turbine (3) generators' (WTGs) of asynchronous fixed speed generator type each connected, when in use, to a WTG grid by the principle of an electrical torsion shaft, when loaded on a computer and running on a computer causes the computer to:
- collect at least one actual parameter representing the grid frequency,
- collect at least one individual wind turbine (3) generator's operational performance related momentary value such as rpm and or a value representing the wind turbine generator's power production of two or more wind turbine generators in the wind farm (1),
- use reference data comprising individual wind turbine generator (6) values representing the power production capacity at different turbine rpm's and for different wind energy content or wind speeds, - determine, based on said collected values and reference data for the individual wind turbine generator, by comparing and matching the momentary performance data with the reference data, the individual wind turbines power production change as a result of rpm change,
- determine, based on individual momentary performance data for two or more wind turbine generators, the collective power production difference for as a result of collective rpm or grid frequency change,
- determine, based on the collective power production of the wind turbines at different rpm's, the optimal rpm and respective grid frequency to achieve highest collective power production, and
- change, through the grid control device, the grid frequency to the determined **optimal grid frequency setting.**

## Patentansprüche

1. Verfahren zum Steuern des Betriebs eines Windparks (1), um eine optimale Leistungserzeugung zu erzielen, umfassend wenigstens zwei Generatoren von Windturbinen (3) des asynchronen Generatortyps (6) mit unveränderlicher Drehzahl, die in Verwendung jeweils mit einem frequenzgesteuerten Wechselstromnetz durch das Prinzip einer elektrischen Torsionswelle verbunden sind, direkt gekoppelt mit einem HVDC-System (10),
**gekennzeichnet durch** folgende Schritte:
- Erfassen wenigstens eines aktuellen Parameters, der die lokale Netzfrequenz repräsentiert,
- Erfassen wenigstens eines momentanen Wertes, der sich auf das Leistungsverhalten eines individuellen Generators der Windturbine (3) bezieht, wie etwa Umdrehungen pro Minute, und/oder eines Wertes, der die Windturbinengenerator-Stromerzeugung wenigstens zweier Windturbinengeneratoren (6) in dem Windpark (1) repräsentiert,
- Verwenden von Bezugsdaten, die Werte eines individuellen Windturbinengenerators (6) enthalten, die die Stromerzeugungskapazität bei unterschiedlichen Umdrehungen pro Minute der Turbine und für unterschiedlichen Windeenergiegehalt oder Windgeschwindigkeiten repräsentieren,
- Bestimmen auf der Basis der erfassten Werte und Bezugsdaten für den individuellen Windturbinengenerator (6), **durch** Vergleichen und Abstimmen der momentanen Leistungsdaten mit den Bezugsdaten, der Stromerzeugungsänderung der einzelnen Windturbinen (3) infolge der Änderungen der Umdrehung pro Minute,
- Bestimmen auf der Basis individueller momentaner Leistungsdaten für wenigstens zwei Windturbinengeneratoren (6) der gesamten Stromerzeugungsdifferenz infolge der Änderung der gesamten Umdrehungen pro Minute oder der Netzfrequenz,
- Bestimmen auf der Basis der gesamten Stromerzeugung der Windturbinen (3) bei unterschiedlichen Umdrehung pro Minute der optimalen Umdrehungen pro Minute und der entsprechenden Netzfrequenz, um die höchste gesamte Stromerzeugung zu erzielen, und
- Ändern der Netzfrequenz **durch** die Netzsteuervorrichtung auf die bestimmte optimale Netzfrequenzeinstellung.

2. Verfahren nach Anspruch 1, **gekennzeichnet durch** den weiteren Schritt
- des Zusammenstellens der Bezugsdaten, die Stromerzeugungswerte beinhalten, in einer Produktionsdatenbezugstabelle.

3. Verfahren nach einem der vorhergehenden Ansprüche, **gekennzeichnet durch**
- Erfassen meteorologischer Daten zum Bestimmen des Energiegehaltes in dem Wind.

4. Verfahren nach einem der vorhergehenden Ansprüche, **gekennzeichnet durch** den weiteren Schritt
- des Verwendens der Windrichtung, der Lufttemperatur und/oder der Luftfeuchtigkeit als meteorologische Daten.

5. System zum Steuern des Betriebs eines Windparks (1), um eine optimale Leistungserzeugung zu erzielen, umfassend wenigstens zwei Generatoren von Windturbinen (3) des asynchronen Generatortyps (6) mit unveränderlicher Drehzahl, die in Verwendung jeweils mit einer Wechselstromseite eines frequenzgesteuerten Netzes durch das Prinzip einer elektrischen Torsionswelle verbunden sind, direkt gekoppelt mit einem HVDC-System (10),
**gekennzeichnet dadurch, dass**:
- ein Speicher dazu eingerichtet ist, Bezugsdaten zu speichern, die die Stromerzeugung eines individuellen Windturbinengenerators (6) bei unterschiedlichen Windgeschwindigkeiten und unterschiedlichen Umdrehungen pro Minute der Turbine repräsentieren,
- Einrichtungen dazu eingerichtet sind, wenigstens einen aktuellen Parameter zu erfassen, der die Netzfrequenz repräsentiert,
- Einrichtungen dazu eingerichtet sind, wenigstens einen momentanen Wert, der sich auf das Leistungsverhalten eines individuellen Generators der Windturbine (3) bezieht, wie etwa Umdrehungen pro Minute, und/oder einen Wert, der die Windturbinengenerator-Stromerzeugung wenigstens zweier Windturbinengeneratoren (6) in dem Windpark (1) repräsentiert, zu erfassen
- Einrichtungen dazu eingerichtet sind, Bezugsdaten zu verwenden, die Werte eines individuellen Windturbinengenerators (6) enthalten, die die Stromerzeugungskapazität bei unterschiedlichen Umdrehungen pro Minute der Turbine und für unterschiedlichen Windeenergiegehalt oder Windgeschwindigkeiten repräsentieren,
- Einrichtungen dazu eingerichtet sind, auf der Basis der erfassten Werte und Bezugsdaten für den individuellen Windturbinengenerator (6), durch Vergleichen und Abstimmen der momentanen Leistungsdaten mit den Bezugsdaten, die Stromerzeugungsänderung der einzelnen Windturbinen (3) infolge der Änderungen der Umdrehung pro Minute zu bestimmen,
- Einrichtungen dazu eingerichtet sind, auf der Basis individueller momentaner Leistungsdaten für wenigstens zwei Windturbinengeneratoren (6) die gesamte Stromerzeugungsdifferenz infolge der Änderung der gesamten Umdrehungen pro Minute oder der Netzfrequenz zu bestimmen,
- Einrichtungen dazu eingerichtet sind, auf der Basis der gesamten Stromerzeugung der Windturbinen (3) bei unterschiedlichen Umdrehungen pro Minute die optimalen Umdrehungen pro Minute und die entsprechenden Netzfrequenz zu bestimmen, um die höchste gesamte Stromerzeugung zu erzielen, und
- Einrichtungen dazu eingerichtet sind, die Netzfrequenz durch die Netzsteuervorrichtung auf die bestimmte optimale Netzfrequenzeinstellung zu ändern.

6. Computerprogrammerzeugnis zum Steuern des Betriebs eines Windparks (1), der eine Gruppe von wenigstens zwei Generatoren von Windturbinen (3) (WTGs) des asynchronen Generatortyps mit unveränderlicher Drehzahl hat, die in Verwendung jeweils mit einem WTG-Netz durch das Prinzip einer elektrischen Torsionswelle verbunden sind, wobei, wenn das Computerprogrammerzeugnis auf einen Computer geladen ist und auf einem Computer läuft, den Computer zu folgenden Tätigkeiten veranlasst:
- Erfassen wenigstens eines aktuellen Parameters, der die Netzfrequenz repräsentiert,
- Erfassen wenigstens eines momentanen Wertes, der sich auf das Leistungsverhalten eines individuellen Generators der Windturbine (3) bezieht, wie etwa Umdrehungen pro Minute, und/oder eines Wertes, der die Windturbinengenerator-Stromerzeugung wenigstens zweier Windturbinengeneratoren in dem Windpark (1) repräsentiert,
- Verwenden von Bezugsdaten, die Werte eines individuellen Windturbinengenerators (6) enthalten, die die Stromerzeugungskapazität bei unterschiedlichen Umdrehungen pro Minute der Turbine und für unterschiedlichen Windeenergiegehalt oder Windgeschwindigkeiten repräsentieren,
- Bestimmen auf der Basis der erfassten Werte und Bezugsdaten für den individuellen Windturbinengenerator, durch Vergleichen und Abstimmen der momentanen Leistungsdaten mit den Bezugsdaten, der Stromerzeugungsänderung der einzelnen Windturbinen infolge der Änderungen der Umdrehung pro Minute,
- Bestimmen auf der Basis individueller momentaner Leistungsdaten für wenigstens zwei Windturbinengeneratoren der gesamten Stromerzeugungsdifferenz infolge der Änderung der gesamten Umdrehungen pro Minute oder der Netzfrequenz,
- Bestimmen auf der Basis der gesamten Stromerzeugung der Windturbinen bei unterschiedlichen Umdrehung pro Minute der optimalen Umdrehungen pro Minute und der entsprechenden Netzfrequenz, um die höchste gesamte Stromerzeugung zu erzielen, und
- Ändern der Netzfrequenz durch die Netzsteuervorrichtung auf die bestimmte optimale Netzfrequenzeinstellung.

## Revendications

1. Procédé de commande des opérations d'une ferme éolienne (1) pour obtenir une production d'énergie optimale, comprenant au moins deux générateurs d'éolienne (3) du type générateur à vitesse fixe asynchrone (6) connectés chacun, lorsqu'ils sont en utilisation, à un réseau électrique alternatif commandé en fréquence par le principe d'un arbre de torsion électrique, couplé directement à un système CCHT (10), **caractérisé par** les étapes
- de collecte d'au moins un paramètre réel représentant la fréquence du réseau électrique local,
- de collecte de la valeur momentanée relative à la performance de fonctionnement d'au moins un générateur d'éolienne (3) individuel telle que le nombre de tours par minute et/ou d'une valeur représentant la production de puissance éolienne de deux générateurs d'éolienne (6) ou plus dans la ferme éolienne (1) ,
- d'utilisation de données de référence comprenant des valeurs de générateur d'éolienne (6) individuel représentant la capacité de production d'énergie à différents nombres de tours par minute d'éolienne et pour différents contenus énergétiques ou vitesses du vent,
- de détermination, sur la base desdites valeurs collectées et données de référence pour le générateur d'éolienne (6) individuel, en comparant et en mettant en correspondance les données de performance momentanée avec les données de référence, de la variation de production d'énergie des éoliennes (3) individuelles en conséquence d'une variation du nombre de tours par minute,
- de détermination, sur la base des données de performance momentanée individuelle pour deux générateurs d'éolienne (6) ou plus, de la différence de production d'énergie collective en conséquence d'une variation collective du nombre de tours par minute ou de la fréquence du réseau électrique,
- de détermination, sur la base de la production d'énergie collective des éoliennes (3) à différents nombres de tours par minute, du nombre de tours par minute optimal et de la fréquence de réseau électrique respective pour atteindre la production d'énergie collective la plus élevée, et
- de changement, par l'intermédiaire du dispositif de commande de réseau électrique, de la fréquence du réseau électrique en le réglage de fréquence de réseau électrique optimal déterminé.

2. Procédé selon la revendication 1,
**caractérisé par** l'étape supplémentaire
- de compilation des données de référence, comprenant des valeurs de production d'énergie, dans une table de référence de données de production.

3. Procédé selon l'une quelconque des revendications précédentes,
**caractérisé par**
- la collecte de données météorologiques pour déterminer les contenues énergétiques du vent.

4. Procédé selon l'une quelconque des revendications précédentes,
**caractérisé par** l'étape supplémentaire
- d'utilisation de la direction du vent, de la température de l'air et/ou de l'humidité atmosphérique en tant que données météorologiques.

5. Système de commande des opérations d'une ferme éolienne (1) pour obtenir une production d'énergie optimale, comprenant au moins deux générateurs d'éolienne (3) du type générateur à vitesse fixe asynchrone (6) connectés chacun, lorsqu'ils sont en utilisation, au côté alternatif d'un réseau électrique commandé en fréquence par le principe d'un arbre de torsion électrique, couplé directement à un système CCHT (10), **caractérisé**
- **en ce qu'**une mémoire est conçue pour mémoriser des données de référence représentant la production d'énergie de générateurs d'éolienne (6) individuels à différentes vitesses du vent et différents nombres de tours par minute d'éolienne,
- **en ce que** des moyens sont agencés pour collectter au moins un paramètre réel représentant la fréquence du réseau électrique,
- **en ce que** des moyens sont agencés pour collectter la valeur momentanée relative à la performance de fonctionnement d'au moins un générateur d'éolienne (3) individuel telle que le nombre de tours par minute et/ou une valeur représentant la production de puissance éolienne de deux générateurs d'éolienne (6) ou plus dans la ferme éolienne (1),
- **en ce que** des moyens sont agencés pour utiliser des données de référence comprenant des valeurs de générateur d'éolienne (6) individuel représentant la capacité de production d'énergie à différents nombres de tours par minute d'éolienne et pour différents contenus énergétiques ou vitesses du vent,
- **en ce que** des moyens sont agencés pour déterminer, sur la base desdites valeurs collectées et données de référence pour le générateur d'éolienne (6) individuel, en comparant et en mettant en correspondance les données de performance momentanée avec les données de référence, la variation de production d'énergie des éoliennes (3) individuelles en conséquence d'une variation du nombre de tours par minute,
- **en ce que** des moyens sont agencés pour déterminer, sur la base des données de performance momentanée individuelle pour deux générateurs d'éolienne (6) ou plus, la différence de production d'énergie collective en conséquence d'une variation collective du nombre de tours par minute ou de la fréquence du réseau électrique,
- **en ce que** des moyens sont agencés pour déterminer, sur la base de la production d'énergie collective des éoliennes (3) à différents nombres de tours par minute, le nombre de tours par minute optimal et la fréquence de réseau électrique respective pour atteindre la production d'énergie collective la plus élevée, et
- **en ce que** des moyens sont agencés pour changer, par l'intermédiaire du dispositif de commande de réseau électrique, la fréquence du réseau électrique en le réglage de fréquence de réseau électrique optimal déterminé.

6. Produit-programme d'ordinateur pour commander les opérations d'une ferme éolienne (1) comportant un groupe d'au moins deux générateurs d'éolienne (3) (WTG) du type générateur à vitesse fixe asynchrone connectés chacun, lorsqu'ils sont en utilisation, à un réseau électrique de WTG par le principe d'un arbre de torsion électrique, lorsqu'il est chargé sur un ordinateur, et son exécution sur un ordinateur amenant l'ordinateur à :
- collecter au moins un paramètre réel représentant la fréquence du réseau électrique,
- collecter la valeur momentanée relative à la performance de fonctionnement d'au moins un générateur d'éolienne (3) individuel telle que le nombre de tours par minute et/ou une valeur représentant la production de puissance éolienne de deux générateurs d'éolienne ou plus dans la ferme éolienne (1) ,
- utiliser des données de référence comprenant des valeurs de générateur d'éolienne (6) individuel représentant la capacité de production d'énergie à différents nombres de tours par minute d'éolienne et pour différents contenus énergétiques ou vitesses du vent,
- déterminer, sur la base desdites valeurs collectées et données de référence pour le générateur d'éolienne individuel, en comparant et en mettant en correspondance les données de performance momentanée avec les données de référence, la variation de production d'énergie des éoliennes individuelles en conséquence d'une variation du nombre de tours par minute,
- déterminer, sur la base des données de performance momentanée individuelle pour deux générateurs d'éolienne ou plus, la différence de production d'énergie collective en conséquence d'une variation collective du nombre de tours par minute ou de la fréquence du réseau électrique,
- déterminer, sur la base de la production, d'énergie collective des éoliennes à différents nombres de tours par minute, le nombre de tours par minute optimal et la fréquence de réseau électrique respective pour atteindre la production d'énergie collective la plus élevée, et
- changer, par l'intermédiaire du dispositif de commande de réseau électrique, la fréquence du réseau électrique en le réglage de fréquence de réseau électrique optimal déterminé.
